# EUROPÄISCHE PATENTSCHRIFT

(11) **EP 3 180 175 B1**
(45) Veröffentlichungstag und Bekanntmachung des Hinweises auf die Patenterteilung: **26.02.2020**
(21) Anmeldenummer: 15750956.3
(22) Anmeldetag: 29.07.2015
(51) Int. Cl.: B29C 41/04, B29C 41/00

(54) **KUNSTSTOFFFORMTEIL UND VERFAHREN ZU SEINER HERSTELLUNG**
PLASTIC MOLDED PART AND METHOD FOR PRODUCING THE SAME
PIÈCE MOULÉE EN MATIÈRE PLASTIQUE ET PROCÉDÉ POUR SA PRODUCTION

(30) Priorität: 15.08.2014 DE 102014111685
(43) Veröffentlichungstag der Anmeldung: 21.06.2017
(73) Patentinhaber: Elkamet Kunststofftechnik GmbH, 35216 Biedenkopf (DE)
(72) Erfinder: EMRICH, Marco, 35327 Ulrichstein (DE); DEUSSEN, Martin, 35039 Marburg (DE)
(74) Vertreter: Keil & Schaafhausen Patent- und Rechtsanwälte PartGmbB
(86) Internationale Anmeldenummer: PCT/EP2015/067420
(87) Internationale Veröffentlichungsnummer: WO 2016/023755

(56) Entgegenhaltungen:
- WO-A2-2008/021571
- US-A- 3 619 866
- US-A- 4 010 020
- US-A1- 2012 183 762

## Beschreibung

Die Erfindung betrifft ein Verfahren zur Herstellung eines Formteils, insbesondere Behälters, aus Kunststoff durch Rotationsformen, wobei ein Ausgangsmaterial in Form eines Kunststoffs oder eines Kunststoffvorläufers in eine Rotationsschmelzform eingebracht und unter Rotation der Rotationsschmelzform ausgeformt wird, wobei die Rotationsschmelzform mit mindestens einem Magnetelement versehen ist.

Kunststoffformteile werden in vielen Bereichen eingesetzt. Als Hohlkörper werden sie bspw. im Automobilbau als Kraftstoffbehälter oder als Tank für sonstige Flüssigkeiten verwendet. Wegen der verhältnismäßig einfachen Formgebung, des geringen Gewichts aber auch der Korrosionsbeständigkeit sind Kunststoffbehälter ein bevorzugtes Mittel, um Flüssigkeiten aufzubewahren. Von ihnen wird verlangt, dass sie mechanisch stabil sind, ein geringes Gewicht aufweisen und den restriktiver werdenden Forderungen nach einem effizienten Packaging im Fahrzeugbau entsprechen.

Üblicherweise werden die Kunststoffbehälter im Rotationsformverfahren mittels eines Rotationswerkzeugs hergestellt. Eine bekannte Form der Herstellung sieht vor, dass eine abgewogene Menge Kunststoffmaterials in Form von Pulver, Pellets, Mikropellets oder dergleichen als Ausgangsmaterial in eine hohle Form gegeben wird, deren Innenoberfläche die Außenfläche des Kunststoffbehälters definiert. Die Form wird dann in Rotation um zwei in der Regel senkrecht zueinander angeordnete Achsen versetzt. Wärme wird in die Rotationsschmelzform eingetragen. Die Drehzahlen der Rotationsschmelzformen sind so niedrig, dass Fliehkräfte im Vergleich zur Schwerkraft einen geringen Einfluss besitzen. Das Kunststoffmaterial beginnt zu schmelzen und sich an der Innenseite der Rotationsschmelzform anzulegen, wodurch dem Kunststoffbehälter seine spätere Form gegeben wird. Für diese weit verbreitete Variante des Rotationsformverfahrens werden Thermoplaste wie Polyethylen (PE), Polypropylen, (PP), Polyamid 6 (PA6), Polyamid 11 oder 12 (PA11, PA12), Polycarbonat (PC) und dergleichen verwendet. Die Verarbeitungstemperaturen müssen oberhalb der Schmelz- oder Erweichungstemperatur des jeweiligen Kunststoffmaterials liegen.

Einige Kunststoffe, insbesondere Thermoplaste mit sehr hoher Schmelz- oder Erweichungstemperatur, bspw. PA6, oder auch Duroplaste, die einer thermoplastischen Verarbeitung naturgemäß nicht zugänglich sind, werden im Rotationsverfahren in an sich ebenfalls bekannter Weise bevorzugt so verarbeitet, dass als Ausgangsmaterial ein chemischer Vorläufer des für das Formteil vorgesehenen Materials, der sogenannte Kunststoffvorläufer, als Schmelze in flüssiger Form in die Rotationsschmelzform eingebracht wird und dort unter Rotation bei gleichzeitiger Formgebung bzw. Ausformung chemisch zum endgültigen Kunststoffwerkstoff reagiert, insbesondere polymerisiert. Dieses Verfahren kommt z.B. vorteilhaft zur Herstellung von Formteilen aus Polyamid 6 (PA6), Polyamid 12 (PA12) oder ihren Co-Polymeren zum Einsatz, wobei als Kunststoffvorläufer die entsprechenden Lactame, also z.B. Caprolactam und/oder Laurinlactam, eingesetzt werden, die bei Raumtemperatur unter Normalbedingungen in fester Form vorliegen, im Rotationsverfahren jedoch als Schmelze mit sehr niedriger Viskosität (Größenordnung 10 mPa·s, d.h. ungefähr wie Wasser) verarbeitet werden. Diese Verfahrensvariante gestattet die Herstellung von Kunststoffformteilen unter Umgehung der bei thermoplastischer Verarbeitung erforderlichen hohen Temperaturen, und die Prozesstemperatur wird bevorzugt unterhalb der Schmelztemperatur des fertigen Kunststoffs gehalten.

Auch die Polymerisationsreaktionen von Dicyclopentadien (DCPD) zu PolyDicyclopentadien (PDCPD, z.B. Telene® der Fa. Rimtec Corp.) oder von cyclischem Butylenterephthalat (z.B. CBT® der Fa. Cyclics) zu Polybutylenterephthalat (PBT) werden im Rotationsverfahren genutzt. Des Weiteren ist es bekannt, Formteile aus Polyurethanen (PU) im Rotationsverfahren durch Reaktion von Di- und/oder Polyisocyanaten mit Di- und/oder Polyolen als Kunststoffvorläufern herzustellen.

Den zuletzt genannten Materialsystemen ist gemeinsam, dass das hergestellte Formteil aus einem Kunststoffmaterial besteht, das erst während der Formgebung, auch Ausformung genannt, im Rotationswerkzeug aus einem Ausgangsmaterial in Form eines Kunststoffvorläufers gebildet wird, der im Rotationswerkzeug zunächst in mehr oder weniger flüssiger Form vorliegt und während des Ausformens chemisch reagiert, insbesondere polymerisiert.

Das Rotationsformen mit Kunststoffen als Ausgangsmaterial wie auch mit Kunststoffvorläufern als Ausgangsmaterial ist allgemein bekannt und bspw. beschrieben in den Monographien
[1] Crawford, Roy J., Rotational Moulding of Plastics, Second Edition, Research Studies Press Ltd., Taunton / John Wiley & Sons Inc., New York, 1996,
[2] Nugent, Paul: Rotational Molding: A Practical Guide, 2001, sowie
[3] Crawford, Roy J., Throne, James L.: Rotational Molding Technology, Plastics Design Library, William Andrew Publishing, Norwich, New York, 2002.

Beim Rotationsformverfahren kommen ferner Teile zum Einsatz, die während des Formprozesses integral mit dem Behälter verbunden werden. Sogenannte Einlegeteile bestehen in der Regel aus Metall. Im rotierten Kunststoffprodukt benötigte Anschraubpunkte können z.B. als Gewindeeinlegeteile an der Forminnenseite fixiert werden. Diese auch Inserts genannten Einlegeteile werden während des Ausformens in die Wandung des Formteils eingebettet und bilden mit dieser so nach dem Erkalten eine beständige Verbindung. Sogenannte Einsetzteile bestehen dagegen in der Regel aus Kunststoff oder auch aus Faserkunststoffverbundwerkstoffen. Im Gegensatz zu Einlegeteilen, die lediglich in die Wandung des Fomteils eingebettet werden, ohne selbst jedoch einen Teil der Wandung zu bilden, stellen Einsetzteile im späteren Formteil einen Teil der Formteilwandung dar. Einlege- und Einsetzteile werden im einfachsten Fall vor dem Formgebungsprozess durch eine Schraube an der Innenwand der Rotationsschmelzform befestigt.

In der Praxis werden neben Schnappsystemen auch Magnethalter verwendet, die metallische Einlegeteile in der Rotationsschmelzform in Position halten.

Ein Problem der Behälterfertigung besteht grundsätzlich darin, dass die Schmelzform nur die Außenkontur des Formteils definiert, nicht aber die Innenform. Bei der Herstellung kann zwar eine theoretische mittlere Wandstärke des Formteils durch geeignete Abstimmung der zugegebenen Materialmenge auf die Größe der Werkzeuginnenoberfläche eingestellt werden, es kann allerdings nicht garantiert werden, dass der Behälter eine konstante Wanddicke aufweist. Diese unterliegt immer einer gewissen Verteilung. Gerade im Bereich von Innenradien, also Bereichen, in denen die Formwandung der Rotationsform ins Werkzeuginnere hineinragt, erhält man Wandstärken, die zum Teil erheblich unterhalb der mittleren Wandstärke liegen. Je kleiner dieser Innenradius ist, desto größer ist das Ausmaß dieser Wandstärkenreduzierung. Im Bereich von Außenradien, also bspw. der äußeren Kante eines Kunststoffbehälters, sammelt sich dagegen Material an, wodurch die Wandstärke in solchen Bereichen über der mittleren Wandstärke liegt. Mit sinkendem Außenradius nimmt das Ausmaß der Wandstärkenerhöhung zu. Während Außenradien lediglich zu einem Wandstärkenzuwachs führen, kann die Stabilität dünnwandiger Stellen im Bereich von Innenradien erheblich beeinträchtigt sein, was die Belastbarkeit und Haltbarkeit des Formteils mindert.

Besondere Herausforderungen ergeben sich bei komplexen Formen, wie z.B. integral ausgebildeten Laschen oder dergleichen. Gerade in engstelligen Bereichen, z.B. im Bereich von Außenwänden, die in einem geringen Abstand parallel zueinander verlaufen, kann es im Verlauf des Rotationsverfahrens zu Brückenbildungen kommen, was die Lunkerbildung zwischen den Wänden begünstigt. Das Konturmerkmal wird dann unvollständig ausgeformt.

Gerade vor dem Hintergrund steigender Anforderung in Bezug auf das Packaging in Fahrzeugen muss aber oftmals ein komplexer und zerklüfteter Bauraum auf dem Fahrzeug oder einer Maschine ideal ausgenutzt werden, was einen komplexen Behälteraufbau mit sich bringt. Es ist daher wünschenswert, die Materialverteilung auch kompliziert geformter Formteile gezielt beeinflussen zu können. Dabei ist es vorteilhaft, wenn die Wandstärke an bestimmten Positionen des fertigen Kunststoffbehälters lokal erhöht werden kann. Eine Erhöhung der Materialeinwaage ist als Abhilfe nur sehr eingeschränkt geeignet, da das zusätzlich eingesetzte Material im Wesentlichen nur zu einer weiteren Wandstärkenerhöhung im Bereich der Außenradien führt, während die Wandstärken im Bereich der Dünnstellen nur unwesentlich verbessert werden. Diese Maßnahme führt letztlich nur dazu, dass der Materialverbrauch und das Teilegewicht erhöht werden, wodurch gerade im Fall von Behältern und Tanks das verfügbare Nutzvolumen reduziert wird.

Es ist bekannt, die Wandstärkenverteilung durch geeignete Wahl von Drehzahlen, Drehzahlverhältnissen, Temperaturverlauf im Werkzeug und anderen Maßnahmen zu beeinflussen. Die US 3,417,097 beschreibt beispielsweise ein Verfahren, bei dem Caprolactam in flüssiger Form in ein Rotationswerkzeug gegeben wird, sich unter Rotation des Werkzeugs an die innere Kontur der Rotationsform anlegt und zu einem Formteil polymerisiert. Zur Verbesserung der Wandstärkengleichförmigkeit wird vorgeschlagen, die Materialmenge auf mindestens zwei Dosiervorgänge aufzuteilen und ein vorbestimmtes Temperatur- und Rotationsprofil abzufahren. Eine gezielte und lokale Beeinflussung der Wandstärke ist auf diese Weise jedoch nicht möglich.

Da im Rotationsverfahren, ähnlich wie beim Blasformen und im Gegensatz zum Spritzgussverfahren, nur die Formteilaußenoberfläche werkzeuggebunden ist, sind den durch derartige Optimierungsmaßnahmen erzielbaren Ergebnissen bei gegebener Formteilgeometrie grundsätzliche Grenzen gesetzt. Je mehr die Formteilgeometrie von der Kugelform abweicht, desto breiter wird die Verteilung der Wandstärken. Besonders ausgeprägt sind diese Effekte bei der Verarbeitung von Monomeren, die als niedrigviskose Schmelze in das Rotationswerkzeug gegeben und unter Rotation auspolymerisiert werden, sie treten jedoch prinzipiell bei allen Rotationsverfahren und bei allen verwendeten Materialsystemen auf.

Eine Möglichkeit zur lokalen Beeinflussung der Wandstärke für die Rotationsformung mit Kunststoffpulvern oder -pellets auf Basis eines thermoplastischen Sinterverfahrens ist aus der US 6,852,788 B2 bekannt. Dort wird eine Zusammensetzung aus Träger- und Binderkomponenten sowie einem Kunststoffpulver beschrieben, die als Formmasse in diejenigen Bereiche des Rotationswerkzeugs aufgebracht wird, in denen die Wandstärke des Formteils erhöht werden soll, also z. B. im Bereich von Rippen und Anschraubdomen. Als Träger- und Binderkomponente werden u.a. Polyethylen sehr niedriger Dichte, Vaseline, Paraffine und Bienenwachs vorgeschlagen. Alternativ können dem Grundpolymer des Formteils angepasste Thermoplaste mit geringem Schmelzindex verwendet werden.

Dieses Verfahren ist jedoch nicht verwendbar, wenn ein Kunststoffvorläufer als Schmelze in die Rotationsschmelzform eingebracht wird und die Polymerisation des Kunststoffvorläufers unterhalb der Schmelztemperatur des fertigen Kunststoffs durchgeführt und aktiviert wird. Weil die Prozesstemperaturen unterhalb der Schmelztemperatur des fertigen Polymeren gehalten werden, würde das mit der Zusammensetzung zugegebene pulverförmige Polymermaterial weder mit sich selbst, noch mit dem durch Polymerisation neu entstehenden Material zusammensintern. Hinzu kommt, dass die Herstellung der Formmasse vergleichsweise aufwendig ist.

Die US 4,010,020 A beschreibt eine Vorrichtung zur Ausbildung gekrümmter Oberflächen durch Rotation, wobei konkret optische Linsen hergestellt werden sollen. Das Werkzeug wird hierbei vollständig mit Material gefüllt, so dass sich massive Linsenkörper bilden. Bei einer Ausführungsform ist ein stationärer Reaktionsbehälter vorgesehen, um den mehrere Magnetpaare horizontal und vertikal rotieren und dadurch das Material in der Form bewegen.

Es ist daher Aufgabe der Erfindung, eine verbesserte Möglichkeit vorzuschlagen, die Wandstärke eines im Rotationsverfahren hergestellten Kunststoffformteils gezielt zu beeinflussen, so dass Wandstärken des fertigen Kunststoffformteils lokal erhöht und gestärkt werden können.

Diese Aufgabe wird erfindungsgemäß mit den Merkmalen des Anspruchs 1 gelöst.

Erfindungsgemäß sieht das Verfahren vor, dass das Ausgangsmaterial und das Magnetelement derart ausgebildet sind, dass das Ausgangsmaterial und das an der Rotationsschmelzform vorgesehene Magnetelement in magnetische Wechselwirkung treten und ein Teil des Ausgangsmaterials während der Ausformung von dem Magnetelement angezogen und festgehalten wird.

Der Erfindung liegt der Gedanke zugrunde, das Ausgangsmaterial nicht mit Fixiermitteln, wie Träger- und Binderkomponenten, an vorbestimmte Stellen zu binden, sondern das Ausgangsmaterial mit magnetischen Eigenschaften auszustatten, so dass das Ausgangsmaterial in magnetische Wechselwirkung mit dem Magnetelement treten kann. Mit anderen Worten, das Ausgangsmaterial ist so beschaffen, dass es vom Magnetelement angezogen und festgehalten werden kann. Das Ausgangsmaterial selbst kann daher magnetisch sein.

Anders als bei träger- und binderkomponentenbasierten Systemen basiert das Festhalten des Ausgangsmaterials auf magnetischer Anziehung zwischen zwei

Körpern und äußert sich im Sinne der Erfindung unter anderem als Kraftwirkung zwischen Magneten, magnetisierten bzw. magnetisierbaren Gegenständen und bewegten elektrischen Ladungen. Die Vermittlung dieser Kraft erfolgt über ein Magnetfeld, das einerseits von diesen Objekten erzeugt wird und andererseits auf sie wirken kann. Im Gegensatz zu bekannten Systemen zur Materiallenkung und der Positionierung von Kunststoffmaterial bei der Formgebung, wie ein träger- und binderkomponentenbasiertes System oder eine magnetische Fixierung von Metallteilen, ist erfindungsgemäß ein Kunststoffmaterial vorgesehen, das magnetische Eigenschaften aufweist bzw. magnetisch ist und mit dem Magnetelement magnetisch zusammenwirkt.

"Magnetische Eigenschaften" bzw. "magnetisch" ist in Bezug auf das Ausgangsmaterial bzw. das Magnetelement im Sinne der Erfindung dahingehend zu verstehen, dass das Ausgangsmaterial und das Magnetelement so ausgebildet sind, dass die oben beschriebene Wechselwirkung zwischen diesen Komponenten während des Formgebungsprozesses bzw. Ausformungsprozesses auftritt. Daher können das Ausgangsmaterial und/oder das Magnetelement z.B. magnetisch oder magnetisiert oder magnetisierbar sein. Erfindungsgemäß baut das Ausgangsmaterial und/oder das Magnetelement ein Magnetfeld auf.

Die Erfindung umfasst alle Möglichkeiten, mit denen zwischen dem Ausgangsmaterial und dem Magnetelement magnetische Kräfte erzeugt werden können, so dass während des Rotationsprozesses ein Teil des Ausgangsmaterials von dem Magnetelement festgehalten wird. So kann das Ausgangsmaterial und/oder das Magnetelement ein Magnet sein, während der jeweils andere Teil zumindest magnetisierbar, vorzugsweise magnetisch ist.

Die Bezeichnung "magnetisch" in Bezug auf das Ausgangsmaterial kann im Sinne der vorliegenden Erfindung ferner bedeuten, dass das entsprechende Material eine magnetische Suszeptibilität X > 0 aufweist oder Zusätze mit einer magnetischen Suszeptibilität X > 0 enthält. Die magnetische Suszeptibilität gibt die Magnetisierbarkeit von Materie in einem externen Magnetfeld an. Die magnetische Permeabilität µᵣ (auch magnetische Leitfähigkeit) bestimmt die Durchlässigkeit von Materie für magnetische Felder. Da magnetische Suszeptibilität X und die relative magnetische Permeabilität µᵣ eines Stoffes durch die Beziehung X = µᵣ - 1 miteinander verknüpft sind, haben geeignete Ausgangsmaterialien und/oder geeignete Zusätze zugleich eine relative Permeabilität (oder Permeabilitätszahl) µᵣ > 1. Die Suszeptibilität lässt sich experimentell bspw. mit einer Gouyschen Waage oder mit einer Faraday-Waage bestimmen.

Das Ausgangsmaterial kann dabei paramagnetisch sein, ist jedoch bevorzugt ferromagnetisch, ferrimagnetisch oder superparamagnetisch. Das Ausgangsmaterial muss nicht zwingend magnetisiert sein, d.h. es muss selbst keine dauermagnetischen Eigenschaften haben. Dies kann jedoch wahlweise der Fall sein.

Ferromagnetismus ist die Eigenschaft bestimmter Materialien, Elementarmagnete zu enthalten, die parallel zueinander ausgerichtet sein können. Das bedeutet, dass Stücke dieser Materialien entweder selbst ein statisches Magnetfeld verursachen oder vom Magnetpol eines äußeren Magnetfelds angezogen werden. Diese Anziehung ist unabhängig von der Polarität des äußeren Magnetfeldes und wird dadurch verursacht, dass die Richtung der parallel ausgerichteten Elementarmagnete im ferromagnetischen Material so verdreht wird, dass sie parallel zum äußeren Magnetfeld liegt. Beispiele für Ferromagneten sind α-Eisen, Kobalt, Nickel.

Der Ferrimagnetismus ist ein kooperatives magnetisches Phänomen, durch das ferrimagnetische Stoffe eine Magnetisierung aufweisen. Solche Stoffe besitzen eine Kristallstruktur, bei der innerhalb bestimmter Bereiche (sogenannte Weiss-Bezirke) die magnetischen Momente der Atome jeweils abwechselnd antiparallel ausgerichtet und dabei betragsmäßig unterschiedlich sind. Zu Material-Gruppen mit ferrimagnetischen Eigenschaften gehören die Ferrite.

Paramagnetismus ist eine der Ausprägungsformen des Magnetismus in Materie. Paramagneten weisen nur so lange eine von Null verschiedene Magnetisierung auf, wie sie sich in einem externen Magnetfeld befinden. Die regellos angeordneten magnetischen Momente eines Atoms oder eines Moleküls ordnen sich teilweise in einem externen Magnetfeld so, dass sich das Magnetfeld im Innern des paramagnetischen Stoffes verstärkt, jedoch nur solange das äußere Magnetfeld existiert. Paramagnetische Materialien haben die Tendenz, in ein Magnetfeld hineingezogen zu werden. Beispiele für paramagnetische Stoffe sind Aluminium, Natrium, α-Mangan, Sauerstoff.

Superparamagnetismus bezeichnet die magnetische Eigenschaft sehr kleiner Teilchen eines ferromagnetischen oder ferrimagnetischen Materials, auch bei Temperaturen unterhalb der Curie-Temperatur T_{C} keine bleibende Magnetisierung zu halten, wenn ein zuvor angelegtes Magnetfeld abgeschaltet wurde.

Diamagnete magnetisieren sich in einem externen Magnetfeld so, dass sich das Magnetfeld in ihrem Innern proportional zur Stärke des angelegten Magnetfelds abschwächt und diamagnetische Materialien dementsprechend die Tendenz haben, aus einem inhomogenen Magnetfeld herauszuwandern. Blei ist ein Beispiel für einen diamagnetischen Stoff.

Das erfindungsgemäße Verfahren kann die folgenden Schritte umfassen.
a) Bereitstellung einer Rotationsschmelzform, die mit mindestens einem Magnetelement versehen ist;
b) Einbringen des Ausgangsmaterials in die Rotationsschmelzform,
c) Versetzen der Rotationsschmelzform in Rotation, wobei ein Teil des Ausgangsmaterials von dem Magnetelement festgehalten wird.

Das Ausgangsmaterial kann ein Kunststoff in Form von Pulver, Pellets, Mikropellets oder dergleichen oder ein Kunststoffvorläufer in Form einer Schmelze sein, wobei durch die Formgebung bzw. Ausformung die Behälterform ausgebildet und die Behälterwand definiert wird. Formgebung oder Ausformung bezeichnet für ein solches Ausgangsmaterial den Vorgang, bei dem das Ausgangsmaterial unter Rotation der Rotationsform zumindest einen Teil der Behälterwandung ausbildet.

Während die Rotationsschmelzform rotiert, zieht das Magnetelement einen Teil des Ausgangsmaterials an und hält diesen fest, so dass das Ausgangsmaterial, in dem Bereich, in dem das Magnetelement angeordnet ist, lokal konzentriert wird oder der Anteil des Ausgangsmaterials an der Gesamtmenge des Ausgangsmaterials in dem Bereich, in dem das Magnetelement angeordnet ist, erhöht wird. Anders ausgedrückt, es erfolgt eine lokale Anhäufung oder Akkumulation des Ausgangsmaterials in dem Bereich, an dem das Magnetelement angeordnet ist. Wesentlicher Bestandteil des Ausformprozesses ist die Rotation der Rotationschmelzform. Während des Schrittes c), also während die Rotationsschmelzform rotiert, verbleibt ein Teil des Ausgangsmaterials beim Magnetelement, weil dieser Teil des Ausgangsmaterials an der Stelle, an dem das Magnetelement angeordnet ist, fixiert ist bzw. dort festgehalten wird. Der Begriff "fixiert" ist im Sinne der Erfindung dahingehend zu verstehen, dass das Magnetelement eine Anziehungs- und Haftwirkung auf das Ausgangsmaterial ausübt, so dass ein Teil des Ausgangsmaterials trotz der Rotation der Rotationsschmelzform den Bereich um das Magnetelement nicht verlässt.

Ohne das Magnetelement würde sich das gesamte Ausgangsmaterial infolge der Rotation der Rotationsschmelzform anders im Inneren der Rotationsschmelzform bewegen und verteilen, wie im Folgenden näher erläutert wird. In einer frühen Phase des Prozesses und/oder bei einer Temperatur und/oder Konsistenz des Ausgangsmaterials, bei der das Ausgangsmaterial noch nicht an der Innenwand der Rotationsschmelzform haftet, fließt oder rieselt das Ausgangsmaterial im Verfahren nach dem Stand der Technik infolge der Schwerkraft von der Werkzeugwandung ab in Richtung des Materialpools am tiefsten Punkt des Werkzeugs, wenn die Wandung sich während der Rotation aus dem Pool herausbewegt. Dies gilt entsprechend auch in späteren Phasen des Verfahrens, wenn sich bereits ein Teil des Ausgangsmaterials an die Innenwand der Rotationsschmelzform angelegt hat und zusammen mit dem Werkzeug rotiert, während zugleich ein weiterer Teil des Ausgangsmaterials noch als Materialpool vorliegt, der sich im Wesentlichen unabhängig vom Werkzeug innerhalb desselben bewegt. Der Aufbau von Wandstärke an einer betrachteten Stelle des Werkzeugs hängt im Wesentlichen davon ab, wie oft diese Stelle den Materialpool durchwandert und wie gut, d.h. in welcher Schichtdicke, das im Pool vorliegende Ausgangsmaterial bei jedem dieser Durchgänge an dieser Stelle der Formschale haftet und von ihr festgehalten und mitgenommen wird.

Im Unterschied dazu wird im erfindungsgemäßen Verfahren ein Teil des Ausgangsmaterials im Bereich des Magnetelements an der Formwandung festgehalten und fließt oder rieselt nicht von der Formwandung ab. Die Fixierung an der Formwandung beruht auf magnetischer Wechselwirkung und ist dabei unabhängig von der Temperatur und/oder Konsistenz des Ausgangsmaterials zu diesem Zeitpunkt. Die magnetische Fixierung erfolgt insbesondere auch bereits bei einem ersten Durchgang des mit dem Magnetelement versehenen Bereichs der Rotationsschmelzform durch den Materialpool. Das im Bereich des Magnetelements an der Formwandung festgehaltene Ausgangsmaterial wird im weiteren Verlauf des Verfahrens an dieser Stelle angesintert und konsolidiert (Ausgangsmaterial in Form eines Kunststoffs) oder polymerisiert (Ausgangsmaterial in Form eines Kunststoffvorläufers). Derselbe Effekt wirkt entsprechend auch in späteren Phasen des Verfahrens weiter, wenn sich bereits ein Teil des Ausgangsmaterials an die Innenwand der Rotationsschmelzform angelegt hat und zusammen mit dieser rotiert, während zugleich ein weiterer Teil des Ausgangsmaterials noch als Materialpool vorliegt, der sich im Wesentlichen unabhängig vom Werkzeug innerhalb desselben bewegt.

Auf diese Weise wird in dem mit dem Magnetelement versehenen Bereich der Rotationsschmelzform der Aufbau der Formteilwandung gezielt gefördert, so dass das in dem erfindungsgemäßen Verfahren hergestellte Formteil in diesem Bereich eine erhöhte Wandstärke aufweist.

Unter einer Erhöhung der Wandstärke wird dabei verstanden, dass die Wandstärke in dem betreffenden Bereich des Formteils über derjenigen liegt, die sich dort in einem Verfahren nach dem Stand der Technik, d.h. ohne magnetische Fixierung, erreichen lässt. Die Wandstärke des betreffenden Bereichs nimmt somit relativ zur mittleren Wandstärke des Formteils zu. Letzteres bedeutet nicht unbedingt, dass die Wandstärke im betreffenden Bereich absolut größer ist als die mittlere Wandstärke. Es kann bspw. bedeuten, dass bei einem Formteil mit 5 mm Nennwandstärke ein bestimmter Bereich bei Fertigung nach dem Stand der Technik eine Wandstärke von nur 1 mm hat, die bei Fertigung nach dem erfindungsgemäßen Verfahren 3 mm beträgt. Es ist natürlich auch möglich, lokale Wandstärkenerhöhungen zu erzielen, bei denen die Wandstärke im Bereich des Magnetelements über der Nennwandstärke liegt.

Die Nennwandstärke d_{N} (mittlere Wandstärke) des Kunststoffformteils ergibt sich dabei jeweils aus der Innenoberfläche A der Rotationsschmelzform und der Masse m sowie der Dichte ρ des Kunststoffmaterials im verarbeiteten Zustand in guter Näherung nach d_{N} = m · A⁻¹ · ρ⁻¹.

Das Magnetelement dient somit zur lokalen Konzentration bzw. zur lokalen Anhäufung und zum Halten von Ausgangsmaterial während der Rotation der Rotationsschmelzform. Mit Hilfe des Magnetelements kann das Ausgangsmaterial mittels magnetischer Wechselwirkung lokal konzentriert werden.

Das Magnetelement ist Teil der Rotationsschmelzform oder an der Rotationsschmelzform befestigt. In beiden Fällen rotiert das Magnetelement zusammen mit der Rotationsschmelzform. Es kommt dabei also nicht zu einer Relativbewegung zwischen der Rotationsschmelzform und dem Magnetelement, sondern die Rotationsschmelzform und das Magnetelement bewegen sich einstückig, bzw. als eine Einheit. Das Magnetelement ist somit auch während der Rotation der Rotationsschmelzform immer ortsfest in Bezug auf seine Position an der Rotationsschmelzform. Durch die magnetische Wechselwirkung erhöht sich der Anteil des Ausgangsmaterials in dem Bereich, in dem das Magnetelement angeordnet ist, der in diesem Bereich ohne das Magnetelement geringer wäre. Dementsprechend weist die Rotationsschmelzform mindestens ein Magnetelement zur lokalen Konzentration von Ausgangsmaterial während des Ausformungsprozess auf.

Somit kann das Verfahren die wie folgt definierten Schritte umfassen:
a) Bereitstellung einer Rotationsschmelzform, die mit mindestens einem Magnetelement versehen ist;
b) Einbringen des Ausgangsmaterials in die Rotationsschmelzform;
c) Versetzen der Rotationsschmelzform in Rotation, wobei ein Teil des Ausgangsmaterials von dem Magnetelement festgehalten wird, während die Rotationsschmelzform beim Ausformen rotiert, wobei das Magnetelement zusammen mit der Rotationsschmelzform rotiert.

Es wurde festgestellt, dass durch den gezielten Einsatz eines Magnetelements in Verbindung mit einem magnetischen Ausgangsmaterial bei der Rotationsformung scharf abgegrenzte und stabile lokale Wandstärkenerhöhungen in den betreffenden Bereichen des Rotationswerkzeugs erreicht werden können, in denen das Magnetelement angeordnet ist. Das Magnetelement hält einen Teil des Ausgangsmaterials durch magnetische Wechselwirkung fest und ermöglicht so die gezielte Beeinflussung der Wandstärke des Kunststoffformteils.

Durch die erfindungsgemäßen Merkmale kann innerhalb der Rotationsschmelzform auch eine Materiallenkung erzielt werden, die bei der Verarbeitung von Ausgangsmaterial in Form von Mischungen ein oder mehrere Materialien aus der Mischung bevorzugt oder sogar selektiv in einem bestimmten Bereich des Rotationswerkzeugs - und damit auch in einem bestimmten Bereich des fertigen Kunststoffformteils - ablagert.

Die erfindungsgemäße Lösung ist universell für eine Reihe von Rotationsformverfahren anwendbar und kann sowohl für Rotationsverfahren auf Basis eines thermoplastischen Sinterverfahrens als auch für Rotationsverfahren auf Basis von niedrigviskosen Kunststoffvorläuferschmelzen, die im Rotationswerkzeug polymerisieren, angewendet werden.

Das Magnetelement wird in denjenigen Bereichen des Rotationswerkzeugs platziert und ggf. fixiert, beispielsweise verklebt, geschraubt, geklemmt, eingeschrumpft, eingepresst oder dergleichen, in denen die Wandstärke des fertigen Kunststoffformteils erhöht bzw. in denen am späteren Formteil ein bestimmtes Funktions- oder Konturmerkmal angeformt werden soll.

Es ist aber auch möglich, das Magnetelement als Einlegeteil, z.B. aus Metall, oder als vorgeformtes Einsetzteil aus Kunststoff auszubilden, das während der Ausformung in die Formteilwand zumindest teilweise eingebettet wird. Ein Kunststoff oder ein Kunststoffvorläufer, der ebenfalls magnetische Eigenschaften aufweist, tritt während der Formgebung mit dem Einlegeteil oder dem Einsetzteil in magnetische Wechselwirkung, so dass sich eine große Menge des Kunststoffes im Bereich des Magnetelements sammelt. So kann beispielsweise ein Flansch, ein Anschluss oder dergleichen besonders fest an der Behälterwand festgelegt und in den Kunststoff eingebettet werden.

Um das Kunststoffmaterial mit magnetischen Eigenschaften zu versehen, ist zumindest eine in das Ausgangsmaterial eingebettete Komponente vorgesehen, die dazu ausgebildet ist, mit dem Magnetelement in magnetische Wechselwirkung zu treten.

Eine weitere Ausführungsform der Erfindung sieht vor, dass der Kunststoff des Ausgangsmaterials einen Zusatz, bspw. in Form eines Additivs oder dergleichen, enthält, der dazu ausgebildet ist, mit dem Magnetelement in magnetische Wechselwirkung zu treten. Anders ausgedrückt, ist der Kunststoff des Ausgangsmaterials mit einem magnetischen Zusatz versehen. Der magnetische Zusatz kann alternativ oder in Ergänzung zu eingebetteten magnetischen Komponenten vorgesehen werden.

Das Ausgangsmaterial kann ein Kunststoffvorläufer mit magnetischen Eigenschaften sein, der eine magnetische Suszeptibilität X > 0 aufweist. Alternativ oder zusätzlich kann der Kunststoffvorläufer magnetische Zusätze mit einer magnetischen Suszeptibilität X > 0 enthalten. Der Kunststoffvorläufer wird z.B. als Flüssigkeit mit geringer Viskosität in das Formwerkzeug eingebracht. Je nach Kunststoffvorläufer, Rezeptur und Temperatur liegt die Anfangsviskosität üblicherweise im Bereich von 4 mPa·s bis 5000 mPa·s, bei den eingangs genannten Lactam-Systemen bevorzugt im Bereich 4 mPa·s bis 100 mPa·s. In diesem Fall ist vorgesehen, dass der Kunststoffvorläufer als flüssige Schmelze in die Rotationsschmelzform eingebracht wird. Er kann jedoch auch in fester Form (z.B. als Pulver, Pellets, Schuppen oder dergleichen) zugegeben und erst im Werkzeug aufgeschmolzen werden, so dass ein Teil der gebildeten Schmelze von dem Magnetelement festgehalten wird.

Bei der Verwendung des Kunststoffvorläufers besteht grundsätzlich die Möglichkeit, während des Schrittes c) Wärme in die Rotationsschmelzform einzubringen. Generell erweist es sich jedoch als vorteilhaft, Schritt c) bei einer Prozesstemperatur durchzuführen, bei der der Kunststoffvorläufer in flüssiger Form vorliegt. Das Magnetelement hält einen Teil des Kunststoffvorläufers fest, wenn die Rotationsschmelzform vorzugsweise biaxial rotiert. Indem das Magnetelement die Schmelze an einer klar definierten Position festhält, wird der Aufbau von Wandstärke in dem mit dem Magnetelement ausgestatteten Bereich des Rotationswerkzeugs gefördert, weil dieser Bereich durch die magnetische Wechselwirkung zwischen dem Ausgangsmaterial und dem Magnetelement eine erhöhte Materialansammlung gegenüber anderen Bereichen des Werkzeugs erfährt.

Eine Erwärmung der Rotationsschmelzform während des Prozesses ist nicht zwingend erforderlich. Geeignete Materialsysteme, wie beispielsweise Polyurethane (PU), lassen sich auch bei Raumtemperatur verarbeiten. Der Kunststoffvorläufer muss dann lediglich in flüssiger Form als Schmelze in die Rotationsschmelzform eingebracht werden, wo er unter anschließender Rotation der Schmelzform auspolymerisiert.

Die Herstellung des Formteils in der Rotationsschmelzform erfolgt allenfalls unter geringem Druck, typischerweise bei einem Druck von unter 2000 mbar, bevorzugt unter 1500 mbar. Besonders bevorzugt ist die Rotationsschmelzform jedoch belüftet, so dass das Verfahren im Wesentlichen drucklos, d.h. bei Atmosphärendruck (z.B. 1013 mbar) abläuft.

Das Ausgangsmaterial kann auch ein Kunststoff mit magnetischen Eigenschaften sein, der eine magnetische Suszeptibilität X > 0 aufweist. Alternativ oder zusätzlich kann der Kunststoff magnetische Zusätze mit einer magnetischen Suszeptibilität X > 0 enthalten und z.B. in Form von Partikeln, bspw. als Pulver, Pellets, Granulat oder dergleichen in das Formwerkzeug eingebracht werden. Die magnetischen Zusätze können mit den Partikeln des Kunststoffmaterials vermengt oder auf diese aufgetrommelt sein (Trockenmischung, "dry blend") oder getrennt in das Werkzeug gegeben und dort mit dem Kunststoffmaterial vermischt werden. Bevorzugt werden die magnetischen Zusätze durch Compoundierung innig mit dem Kunststoffmaterial vermischt, so dass die Kunststoffpartikel in ihrem Inneren mit den Zusätzen gefüllt sind, wodurch insbesondere auch ein fester Zusammenhalt zwischen den Kunststoffpartikeln und den magnetischen Zusätzen sichergestellt wird. In diesem Fall ist es auch ausreichend, wenn nur ein Teil der Kunststoffpartikel magnetische Zusätze enthält. Der Basiswerkstoff, die Einfärbung, die Additivierung sowie andere Eigenschaften des Kunststoffmaterials können für magnetische und nicht-magnetische Partikel identisch oder verschieden sein.

Die magnetischen Eigenschaften können grundsätzlich chemisch in das Kunststoffmaterial integriert sein, indem z.B. Substituenten an der Polymerkette oder Monomereinheiten in der Polymerkette vorhanden sind, die eine magnetische Suszeptibilität X>0 aufweisen. Auch in diesem Fall können Mischungen von magnetischen und nicht-magnetischen Kunststoffmaterialien eingesetzt werden, wobei der Basiswerkstoff, die Einfärbung, die Additivierung sowie andere Eigenschaften des Kunststoffmaterials für magnetische und nicht-magnetische Partikel identisch oder verschieden sein können.

Bei der Verwendung von Kunststoff als Ausgangsmaterial wird bevorzugt während der Formgebung im Schritt c) Wärme in die Rotationsschmelzform eingebracht werden. Dabei hält das Magnetelement einen Teil des Ausgangsmaterials fest, wenn die Rotationsschmelzform vorzugsweise biaxial rotiert. Indem das Magnetelement einen Teil der Partikel des Kunststoffmaterials festhält, wird der Aufbau von Wandstärke in dem mit dem Magnetelement ausgestatteten Bereich des Rotationswerkzeugs gefördert, weil dieser Bereich durch die magnetische Wechselwirkung zwischen dem Ausgangsmaterial und dem Magnetelement eine erhöhte Materialansammlung gegenüber anderen Bereichen des Werkzeugs erfährt.

Auch in dieser Verfahrensvariante erfolgt die Herstellung des Formteils in der Rotationsschmelzform allenfalls unter geringem Druck, typischerweise bei einem Druck von unter 2000 mbar, bevorzugt von unter 1500 mbar. Besonders bevorzugt ist die Rotationsschmelzform belüftet, so dass das Verfahren im Wesentlichen drucklos, d.h. bei Atmosphärendruck (z.B. 1013 mbar) abläuft.

Ferner kann ein Einsetzteil aus Kunststoff vorgesehen sein, dessen Kunststoff mit dem Ausgangsmaterial und/oder dem Magnetelement in magnetische Wechselwirkung treten kann. Erfindungsgemäß sieht ein Verfahren zur Herstellung eines Formteils, insbesondere Behälters, aus Kunststoff durch Rotationsformen vor, dass ein zumindest teilweise aus Kunststoff bestehendes Einsetzteil in eine Rotationsschmelzform eingebracht und während des Ausformens des Formteils bzw. unter Rotation der Rotationsschmelzform integral in das Formteil, z.B. in eine Behälterwand, eingebaut wird, dass die Rotationsschmelzform mit mindestens einem Magnetelement versehen ist, und dass das Einsetzteil und das Magnetelement derart ausgebildet sind, dass der Kunststoff des Einsetzteils und das Magnetelement in magnetische Wechselwirkung treten und das Einsetzteil während des Ausformen des Formteils von dem Magnetelement angezogen und festgehalten wird. Das Einsetzteil bildet im späteren Formteil einen Teil der Formteilwandung und kann dabei zugleich spezielle Funktionen erfüllen oder spezielle Eigenschaften aufweisen. Das Einsetzteil kann bspw. in Form eine Lasche, einer Tülle, eines transluzenten Sichtfensters oder dgl. ausgeführt sein und im Formteil entsprechend eine integrierte Lasche, Tülle oder ein Sichtfenster oder dgl. bilden. Das Einsetzteil liegt dabei nach außen und vorzugsweise auch nach innen überwiegend frei, ohne von einer aus dem Ausgangsmaterial gebildeten Kunststoffschicht bedeckt zu sein. Es kann von beiden Seiten der Formteilwandung sichtbar sein und bildet einen Teil der Formteilaußenwand und vorzugsweise auch der Formteilinnenwand.

Der überwiegende, nach außen frei liegende Teil des Einsetzteils kann über 50% seiner der Außenseite des Formteils zugewandten Fläche betragen. Vorzugsweise beträgt er über 75%, besonders bevorzugt über 90%. Der überwiegende, nach innen frei liegende Teil des Einsetzteils kann über 50% seiner der Innenseite des Formteils zugewandten Fläche betragen. Vorzugsweise beträgt er über 75%, besonders bevorzugt über 90%. Als Außenseite gilt dabei immer die beim Ausformen der Formschale zugewandte Seite des Formteils.

So kann das Einsetzteil durch das Magnetelement während der Formgebung in Position gehalten werden. Ein weiterer Effekt kann darin bestehern, dass ein Teil des Ausgangsmaterials von dem Einsetzteil angezogen und während der Ausformung festgehalten wird.

Das Einsetzteil kann in Kombination mit Ausgangsmaterial in Form von Kunststoff oder Kunststoffvorläufer verwendet werden. Der Kunststoff des Ausgangsmaterials bzw. der sich aus dem Kunststoffvorläufer bildende Kunststoff können mit dem Kunststoff des Einsetzteils identisch oder von diesem verschieden sein. Das Einsetzteil aus Kunststoff kann zumindest teilweise aus einem Kunststoff mit magnetischen Eigenschaften bestehen, der eine magnetische Suszeptibilität X > 0 aufweist. Alternativ oder zusätzlich kann das Einsetzteil magnetische Zusätze mit einer magnetischen Suszeptibilität X > 0 enthalten.

Formgebung oder Ausformung bezeichnet für ein solches Einsetzteil den Vorgang, bei dem ein Kunststoff oder Kunststoffvorläufer ausgeformt wird und zumindest einen Teil der Behälterwand bildet. Während dieses Vorgangs wird das Einsetzteil in die Formteilwand eingebaut oder eingebettet und bildet dabei einen weiteren Teil der Behälterwand. Der Kunststoff oder Kunststoffvorläufer, in den das Einsetzteil eingebettet wird, kann ebenfalls magnetische Eigenschaften aufweisen.

Erfindungsgemäß kann das Einsetzteil zu Beginn des Verfahrens im Bereich des Magnetelements im Werkzeug positioniert und von diesem dort gehalten werden. Das Magnetelement kann so eine Fixierfunktion übernehmen. Ausgangsmaterial, beispielsweise ein Kunststoff oder ein Kunststoffvorläufer, das wahlweise magnetisch oder unmagnetisch sein kann, wird in die Rotationsschmelzform gegeben, die dann vorzugsweise biaxial rotiert und ggf. aufgeheizt wird. So können bestimmte Konturbereiche oder Funktionsmerkmale des späteren Kunststoffformteils, bspw. Laschen, Tüllen, interne Abschottungen, Kammern, Schwallwände, Filtertöpfe, Bereiche aus einem anderen oder einem anders gefärbten Material, Sichtfenster oder dgl. als vorgeformtes Einsetzteil in das Werkzeug eingesetzt, magnetisch dort gehalten und während des Verfahrens durch Ansintern, Einbetten oder dgl. mit weiterem Ausgangsmaterial verbunden und so in das Kunststoffformteil oder in seine Wandung integriert werden und dabei selbst einen Teil der Formteilwandung bilden.

Das magnetische Einsetzteil kann dabei auch spezielle Eigenschaften in das Kunststoffformteil einbringen, indem es bspw. aus gefülltem, faserverstärktem oder besonders additiviertem Material besteht. So ist es zur lokalen Verstärkung des Kunststoffformteils vorteilhaft, Einsetzteile aus Faserkunststoffverbundwerkstoffen (FKV-Werkstoffe) oder ihren entsprechenden Vorstufen vorzusehen, die magnetische Zusätze enthalten. Besonders beanspruchte Stellen des Kunststoffformteils können so gezielt verstärkt werden.

Ferner kann der Faserkunststoffverbundwerkstoff einen thermoplastischen oder einen duroplastischen Kunststoff als Matrix enthalten. Das Fasern enthaltende Einsetzteil kann insbesondere ein Prepreg, ein Preform, ein Organoblech oder dergleichen sein, das eine magnetische Suszeptibilität X > 0 aufweist oder magnetische Zusätze mit einer magnetischen Suszeptibilität X > 0 enthält und bevorzugt der Werkzeug- und späteren Formteilkontur angepasst ist. Es wird im Bereich des Magnetelements in das Werkzeug eingesetzt, magnetisch dort gehalten und während des Verfahrens durch Tränken, Anpolymerisieren, Ansintern, Einbetten oder dgl. mit weiterem Ausgangsmaterial verbunden und so in das Kunststoffformteil oder in seine Wandung integriert. Unter einem Prepreg versteht man ein mit aushärtbarem Harz getränktes Fasergewebe, Fasergelege oder dergleichen, das durch eine thermische Behandlung ausgehärtet wird, wobei eine duroplastische Kunststoffmatrix entsteht. Unter einem Preform versteht man ein mit Klebe- oder Fixiermitteln in seiner späteren Form gehaltenes Fasergewebe, Fasergelege oder dergleichen, das noch keine Kunststoffmatrix enthält bzw. noch nicht mit aushärtbarem Harz getränkt ist. Unter einem Organoblech versteht man einen Faserverbundwerkstoff, bei dem ein Fasergewebe, ein Fasergelege oder dergleichen in einer thermoplastischen Kunststoffmatrix eingebettet ist.

Das Einsetzteil kann jedoch auch beliebige andere Eigenschaften aufweisen. So kann bspw. ein Kunststoffformteil aus einem ersten Kunststoffmaterial mit einem Einsetzteil aus einem zweiten Kunststoffmaterial hergestellt werden, wodurch das Formteil lokal bestimmte erwünschte Eigenschaften erhält.

Für Herstellungsverfahren, bei denen das Ausgangsmaterial als Kunststoffvorläufer in flüssiger Form in die Rotationsschmelzform eingebracht wird, ist das Ausgangsmaterial bevorzugt eine niedrigviskose Schmelze, insbesondere eine Oligomer- oder Monomerschmelze. Je nach Kunststoffvorläufer, Rezeptur und Temperatur liegt die Anfangsviskosität üblicherweise im Bereich von 4 mPa·s bis 5000 mPa·s. So werden für die Fertigung von Kunststoffformteilen aus Polyamid 6 (PA6), Polyamid 12 (PA12) und deren Co-Polymeren als monomeres Ausgangsmaterial vorzugsweise die entsprechenden Lactame, wie z.B. Caprolactam und/oder Laurinlactam, als Kunststoffvorläufer eingesetzt. Die Lactamschmelzen haben je nach Rezeptur und Temperatur in der Regel eine Anfangsviskosität im Bereich 4 mPa·s bis 100 mPa·s.

Weitere geeignete Materialien zur Fertigung der erfindungsgemäßen Kunststoffformteile sind Polydicyclopentadien (DCPD) und Polybutylenterephthalat (PBT). Als monomeres bzw. oligomeres Ausgangsmaterial werden in diesen Fällen als Kunststoffvorläufer bevorzugt Dicyclopentadien (DCPD; z.B. Telene® der Fa. Rimtec Corp.) bzw. cyclisches Oligobutylenterephthalat (z.B. CBT® der Fa. Cyclics) mit den entsprechenden Katalysatoren bzw. Zusätzen eingesetzt. Ebenfalls in Frage kommen Polyurethane (PU), zu deren Herstellung als Kunststoffvorläufer Mischungen aus Di- und/oder Polyisocyanaten und Di- und/oder Polyolen eingesetzt werden. Eine oder beide dieser Vorläuferkomponenten können auch Oligomere oder Präpolymere, d.h. Polymere mit relativ geringem Molekulargewicht, sein.

Kunststoffvorläufer im Sinne der vorliegenden Erfindung sind ganz allgemein Monomere, Oligomere, Präpolymere und dergleichen, einschließlich Mischungen von zwei oder mehr Stoffen dieser Kategorien. Die erfindungsgemäßen Kunststoffvorläufer liegen in der Rotationsschmelzform als flüssige Schmelze vor und reagieren, ggf. unter dem Einfluss ebenfalls zugesetzter Katalysatoren, Aktivatoren oder sonstiger Zusätze, unter Bildung eines Kunststoffs. Bei der Reaktion kann es sich um radikalische, kationische oder anionische Polymerisation, Polyaddition, Polykondensation, Metathesepolymerisation oder dergleichen handeln. Bei dem erhaltenen Kunststoff kann es sich um Thermoplaste oder Duroplaste handeln.

Kunststoffe im Sinne der vorliegenden Erfindung sind ganz allgemein sinterbare oder thermoplastisch verarbeitbare Polymere, wie z.B. Polyethylen (PE), Polypropylen (PP), Polyamid 6 (PA6), Polyamid 11 (PA11), Polyamid 12 (PA12), Polycarbonat (PC), Polyvinylchlorid (PVC) und dergleichen. Mit umfasst sind auch solche Materialtypen, die in der Rotationsschmelzform durch dem thermoplastischen Ausgangsmaterial zugesetzte Vernetzungsmittel chemisch vernetzt werden und dadurch ein Kunststoffformteil aus duroplastischem Material ergeben, bspw. aus vernetztem Polyethylen (XPE) im Fall der Verarbeitung von durch entsprechende Additive vernetzbarem Polyethylen (PE).

Das Ausgangsmaterial oder die magnetischen Zusätze zum Ausgangsmaterial weisen eine magnetische Suszeptibilität X>0 oder, anders ausgedrückt, eine relative Permeabilität µᵣ > 1 auf. Sie haben somit paramagnetische, ferrimagnetische, ferromagnetische oder superparamagnetische Eigenschaften. Wegen der Größenordnung der magnetischen Wechselwirkung mit dem Magnetelement werden Ausgangsmaterialien oder magnetische Zusätze mit ferrimagnetischen, ferromagnetischen oder superparamagnetischen Eigenschaften bevorzugt.

Das magnetische Ausgangsmaterial oder die magnetischen Zusätze können im magnetisierten Zustand, d.h. als (ggf. mikroskopische) Permanentmagnete, eingesetzt werden. Bei zu starker Magnetisierung kann dies jedoch zu unerwünschter Agglomeration führen. Bevorzugt werden das magnetische Ausgangsmaterial oder die magnetischen Zusätze daher ohne vorherige Magnetisierung eingesetzt. Werden das Ausgangsmaterial und/oder die magnetischen Zusätze vormagnetisiert, also als mikroskopische Permanentmagnete eingesetzt, so braucht das Magnetelement selbst nicht zwingend magnetisiert zu sein, es kann jedoch auch in diesem Fall ein Permanent- oder Elektromagnet sein.

Als magnetische Zusätze kommen generell paramagnetische Metallsalze oder paramagnetische Metallkomplexe in Frage. Je größer die Zahl der ungepaarten Elektronen des Zentralatoms bzw. Zentralkations, desto höher das Ausmaß des Paramagnetismus. Daher sind im Fall von Komplexen solche bevorzugt, deren anorganische oder organische Liganden im Sinne der Ligandenfeldtheorie eine geringe Ligandenfeldaufspaltung bewirken, so dass das Metall des Zentralatoms bzw. Zentralions in einer *high-spin*-Konfiguration vorliegt. Im Allgemeinen ist die Stärke der magnetischen Wechselwirkung zwischen Magnetelement und paramagnetischem Ausgangsmaterial jedoch relativ gering. Deutlich stärkere Wechselwirkungskräfte zwischen dem Magnetelement und dem magnetischen Ausgangsmaterial bzw. seinen magnetischen Zusätzen lassen sich allerdings erreichen, wenn kooperative oder kollektive magnetische Effekte genutzt werden, die in magnetischen Festkörpern unterhalb der jeweiligen Curie-Temperatur T_{C} auftreten und zu besonders hohen Werten der Suszeptibilität X bzw. der Permeabilität µᵣ führen.

Daher werden als magnetische Zusätze bevorzugt metallische, keramische, Verbund- oder sonstige Werkstoffe mit entsprechenden magnetischen Eigenschaften eingesetzt, in denen die magnetisch aktive Komponente als (ggf. nanoskaliger) Festkörper vorliegt, also in Form von Spänen, Feilspänen, Pulver, sonstigen Partikeln oder Nanopartikeln. Geeignet sind ferromagnetische Metalle wie z.B. Eisen (Fe), Cobalt (Co), Nickel (Ni) oder ferromagnetische Legierungen, z.B. aus Eisen, Aluminium, Nickel und Cobalt ("Alnico") oder solche aus Samarium, Eisen und Cobalt. Heuslersche Legierungen aus den an sich nicht ferromagnetischen Metallen Kupfer, Aluminium und Mangan sind ebenfalls als ferromagnetische Zusätze geeignet, ebenso wie Legierungen aus Neodym (Ne), Eisen (Fe) und Bor (B).

Magnetit (FeO·Fe₂O₃ = Fe₃O₄) weist ferrimagnetische Eigenschaften auf und ist als Zusatz mit hoher magnetischer Suszeptibilität ebenfalls geeignet. Auch weitere Ferrite des allgemeinen Typs M^{ll}O·Fe₂O₃ sind ferrimagnetisch, haben hohe magnetische Suszeptibilitäten und sind daher als magnetische Zusätze geeignet, wobei M^{ll} z.B. Mangan (Mn), Cobalt (Co), Nickel (Ni), Kupfer (Cu), Zink (Zn), Magnesium (Mg) oder Cadmium (Cd) sein kann.

Ferro- oder ferrimagnetische Materialien können auch in Form von Nanopartikeln als magnetische Zusätze eingesetzt werden. Wenn die Partikelgröße so gewählt wird, dass jeder Partikel aus nur einer magnetischen Domäne (Weiss-Bezirk) besteht, weisen die Zusätze dann ein superparamagnetisches Verhalten auf.

Größe und ggf. Oberflächenbehandlung oder -beschichtung der als magnetischen Zusätze eingesetzten Partikel können auf das jeweilige Ausgangsmaterial abgestimmt werden.

Im Fall niedrigviskoser Kunststoffvorläuferschmelzen hat sich herausgestellt, dass die magnetischen Partikel nicht zu groß sein dürfen, da es sonst im inhomogenen Magnetfeld des Magnetelements quasi zu einer Sedimentation der magnetischen Partikel im Feldgradienten kommt, weil sich Partikel und umgebende Schmelze im Wesentlichen unabhängig voneinander bewegen können. Das Magnetelement am Werkzeug ist dann - im schlechtesten Fall - vor allem mit magnetischen Partikeln belegt, ohne dass damit gleichzeitig eine merkliche Materiallenkung oder Wandstärkenerhöhung einhergeht. Die Wandung des Kunststoffformteils weist an ihrer Außenfläche im Bereich des Magnetelements eine Ansammlung des magnetischen Zusatzes auf.

Dieser unerwünschte Effekt lässt sich zugunsten eines erwünschten Ergebnisses reduzieren, indem für den magnetischen Zusatz hinreichend kleine Partikelgrößen gewählt werden. Gute Ergebnisse lassen sich mit Partikelgrößen kleiner 50 µm, besonders bevorzugt kleiner 10 µm erzielen, insbesondere bevorzugt in Form von Nanopartikeln kleiner 500 nm, stärker bevorzugt kleiner 100 nm, insbesondere bevorzugt kleiner 20 nm. Mit abnehmender Partikelgröße kommt die Partikelgröße in die Größenordnung der magnetischen Domänen (Weiss-Bezirke). Wenn die Partikelgröße der Größe einer magnetischen Domäne entspricht, weisen Partikel aus an sich ferro- oder ferrimagnetischen Werkstoffen ein superparamagnetisches Verhalten auf.

Der Einfluss von Sedimentationseffekten oder Entmischung im inhomogenen Magnetfeld bei der Verarbeitung niedrigviskoser Kunststoffvorläuferschmelzen nimmt außer mit sinkender Partikelgröße auch mit zunehmender Anfangsviskosität der Schmelze ab und lässt sich daher alternativ oder zusätzlich durch viskositätserhöhende Zusätze zum Kunststoffvorläufer reduzieren.

Alternativ oder zusätzlich lassen sich Sedimentationseffekte wirksam reduzieren, indem das Magnetelement nicht als Permanentmagnet, sondern als Elektromagnet ausgeführt wird. Dadurch kann das Magnetfeld gezielt dann eingeschaltet werden, wenn die Reaktion der anfangs sehr niedrigviskosen Schmelze des Kunststoffvorläufers eingesetzt und bereits zu einer Viskositätserhöhung geführt hat. Der Zeitpunkt zum Einschalten des Magnetfelds wird bevorzugt so gewählt, dass die Materialviskosität einerseits ausreichend hoch ist, um Sedimentationseffekte weitgehend zu eliminieren, aber gleichzeitig noch niedrig genug, um den gewünschten Effekt der Materiallenkung im Werkzeug zuzulassen. Er lässt sich für jede Kombination aus Materialsystem, magnetischen Zusätzen und Rotationswerkzeug durch Vorversuche empirisch ermitteln.

Weitere Möglichkeiten zur Reduzierung der Entmischung wie auch zur Verhinderung von Agglomeration eröffnen sich durch Oberflächenbehandlung oder -beschichtung der magnetischen Partikel. So lassen sich die Partikel der magnetischen Zusätze durch Umhüllung mit oberflächenaktiven Substanzen wie Tensiden (z.B. Tetraalkylammoniumionen), Fettsäuren oder Polymeren beschichten und voneinander isolieren. Gleichzeitig verbessert sich dadurch ihre Verträglichkeit mit dem Ausgangsmaterial. Dadurch wird die Stabilität der Suspension, Dispersion oder kolloidalen Lösung erhöht, so dass Sedimentation und Agglomeration der Partikel wirksam reduziert werden. Die einzelnen Partikel erhalten - ähnlich wie molekulardispers gelöste Stoffe in Lösungsmitteln - durch Vermittlung der oberflächenaktiven Beschichtung quasi eine "Solvathülle" aus Molekülen der Kunststoffvorläuferschmelze.

Wenn die zugesetzten magnetischen Partikel klein genug sind, werden sie in der Vorläuferschmelze bereits durch ihre thermische Energie in Schwebe gehalten. Die dafür notwendige Partikelgröße d hängt gemäß d < (6 kT / π Δρ g h)^{1/3} von der Höhe h des Fluidvolumens, der Temperatur T und dem Dichteunterschied Δρ zwischen den Partikeln und der Kunststoffvorläuferschmelze ab; k ist die Boltzmann-Konstante, g die Erdbeschleunigung. Für den Fall h = 10 cm, T = 293 K und Δρ = 4000 kg/m³ ergibt sich, dass die thermische Energie Partikel mit einem Durchmesser von 12 nm und darunter in Schwebe halten kann. Völlig unabhängig von dieser Sedimentationsbetrachtung im Schwerefeld entspricht dies zugleich etwa dem Größenbereich, in dem Partikel aus ferro- oder ferrimagnetischen Werkstoffen aus einer Domäne (Weiss-Bezirk) bestehen und somit superparamagnetische Eigenschaften aufweisen. Aus diesem Grund sind als magnetische Zusätze insbesondere zu niedrigviskosen Kunststoffvorläuferschmelzen Nanopartikel mit Durchmessern unterhalb von 20 nm besonders bevorzugt.

Magnetische Nanopartikel der beschriebenen Art sind kommerziell erhältlich. Sie werden bspw. in Form von Ferrofluiden eingesetzt, die in der Technik z.B. zur reibungsarmen Abdichtung rotierender Wellen oder zur Kühlung von Lautsprechern genutzt werden.

Wenn die Umhüllung der magnetischen Nanopartikel zumindest zum Teil aus polymerisationsfähigen Molekülen besteht, die gemeinsam mit dem Kunststoffvorläufer polymerisieren können, werden die magnetischen Nanopartikel über ihre Umhüllung chemisch mit dem sich bildenden Kunststoffmaterial des Kunststoffformteils verknüpft.

Die magnetische Wechselwirkung zwischen einem Ausgangsmaterial und einem Magnetelement lässt sich auch nutzen, um eines von mehreren Materialien einer Materialmischung bevorzugt oder sogar selektiv in einem mit einem Magnetelement versehenen Bereich des Werkzeugs abzulagern, indem bei der Verarbeitung von Materialmischungen nur eines der in der Mischung vorhandenen Ausgangsmaterialien magnetisch ist oder magnetische Zusätze enthält.

Gemäß einer weiteren Ausführungsform ist das Ausgangsmaterial Teil einer Mischung, wobei wenigstens ein weiterer Teil der Mischung nicht-magnetisch ist. So kann z.B. ein Ausgangsmaterial eingesetzt werden, das eine Mischung aus magnetischen und nicht-magnetischen Materialien umfasst. Es wurde festgestellt, dass durch den gezielten Einsatz eines Magnetelements in Verbindung mit einer Mischung aus magnetischem und nicht-magnetischem Ausgangsmaterial das magnetische Material stark bevorzugt oder sogar selektiv in den betreffenden Bereichen des Rotationswerkzeugs abgelagert werden kann, in denen das Magnetelement angeordnet ist. Das Magnetelement hält den magnetischen Teil des Ausgangsmaterials durch magnetische Wechselwirkung fest und ermöglicht so die Materiallenkung an bestimmte Stellen des Kunststoffformteils.

Zur Herstellung eines schwarzen Behälters mit einem transparenten oder transluzenten Sichtfenster zur Füllstandkontrolle kann bspw. ein schwarzes Ausgangsmaterial, z.B. ein schwarz eingefärbter Thermoplast (bspw. PE, PP, PC, PA), mit einem transparenten oder transluzenten Ausgangsmaterial, z.B. nicht eingefärbtem Thermoplast (bspw. ebenfalls PE, PP, PC, PA), im Werkzeug zusammen verarbeitet werden. Das Magnetelement wird in dem Bereich des Werkzeugs angeordnet, an dem sich im späteren Produkt das Sichtfenster befinden soll. Das nicht eingefärbte Material enthält dazu magnetische Zusätze, das schwarz eingefärbte Material enthält keine magnetischen Zusätze. Im Bereich des Magnetelements lagern sich stark bevorzugt oder sogar selektiv die magnetischen Partikel des nicht eingefärbten Ausgangsmaterials ab, so dass das schwarze Kunststoffformteil ein Sichtfenster aus transparentem oder transluzentem Material aufweist.

Derartige magnetische Bereiche in einem Kunststoffformteil lassen sich vielfältig verwenden. Neben der Herstellung von Kunststoffformteilen mit Sichtfenstern lassen sich auch Formteile herstellen, die mehrfarbig sind oder bestimmte Bereiche haben, die besondere andere Eigenschaften aufweisen.

Grundsätzlich können ein oder mehrere Magnetelemente bei der Herstellung eines Kunststoffformteils zum Einsatz kommen und die genannten Effekte bewirken.

Bei dem Magnetelement kann es sich um einen Permanentmagneten in Stab-, U-, Ring-, Scheiben- oder sonstiger Form handeln. Das Magnetelement kann jedoch auch aus einem ferro- oder ferrimagnetischen Werkstoff bestehen, der nicht magnetisiert ist, so dass das Magnetelement selbst kein Permanentmagnet ist.

In diesem Fall wird bevorzugt ein Ausgangsmaterial eingesetzt, das vormagnetisiert ist und/oder vormagnetisierte magnetische Zusätze enthält und mithin selbst dauermagnetische Eigenschaften aufweist.

Als Magnetelement kann auch ein Elektromagnet verwendet werden. In diesem Fall kann der Elektromagnet in der Rotationsform von außen bestromt werden, so dass sich ein zuverlässiges und kräftiges Magnetfeld aufbaut. In allen genannten Fällen können Werkstoff, Gestalt und magnetische Eigenschaften des Magnetelements dem jeweiligen Anwendungsfall angepasst werden.

Um möglichst starke und lokal scharf abgegrenzte Effekte bei der magnetischen Fixierung von Ausgangsmaterial zu erzielen, können für die Rotationsschmelzform, insbesondere für ihre Formschale, Werkstoffe mit geringer magnetischer Suszeptibilität eingesetzt werden, insbesondere solche, die dia- oder paramagnetisch, aber nicht ferro- oder ferrimagnetisch sind, also bspw. Aluminium. So wird der Einfluss des Werkstoffs auf den Verlauf der magnetischen Feldlinien zwischen Ausgangsmaterial und Magnetelement berücksichtigt. Weiterhin kann auch die Gestaltung des Rotationswerkzeugs so gewählt werden, dass die gewünschten magnetischen Feldlinien entstehen. Der erfindungsgemäße Effekt kann jedoch auch in Stahlformen beobachtet werden, insbesondere bei geringer Wandstärke der Werkzeugwandung, oder wenn das Magnetelement in einer Durchgangsbohrung der Formwandung angeordnet ist und direkten Kontakt zum Ausgangsmaterial hat oder wenn es von außen in einer Vertiefung oder einem Sackloch der Formwandung angeordnet ist.

Als Werkstoff für das Magnetelement kommen alle metallischen, keramischen oder sonstigen zur Herstellung von Permanent- oder Elektromagneten geeigneten Werkstoffe oder Verbundwerkstoffe in Frage. Der Werkstoff des Magnetelements muss unter den Bedingungen des Rotationsverfahrens beständig sein.

Seine Curie-Temperatur T_{C} muss über den Prozesstemperaturen des vorgesehenen Rotationsverfahrens liegen, vorzugsweise deutlich darüber.

So können bspw. Magnete aus Ferrit verwendet werden, das eine Curie-Temperatur von ca. T_{C} = 450°C hat und bis zu 250 °C eingesetzt werden kann. Auch Samarium-Cobalt-Legierungen (SmCo) sind als Werkstoff für das Magnetelement geeignet. Ihre Curie-Temperatur ist vergleichbar mit derjenigen von Ferrit-Werkstoffen, und sie können bei Temperatur von bis zu 300 °C eingesetzt werden.

Für den Einsatz bei noch höheren Temperaturen sind AlNiCo-Legierungen aus den Hauptbestandteilen Eisen (Fe), Aluminium (Al), Nickel (Ni) und Cobalt (Co) geeignet, die sehr korrosionsbeständig sind, Curie-Temperaturen T_{C} > 800 °C aufweisen und bis zu 450 °C (einige Typen bis zu 550 °C) eingesetzt werden können.

Sehr starke Permanentmagnete werden aus Legierungen aus Neodym (Ne), Eisen (Fe) und Bor (B) hergestellt. Diese Neodym-Magnete haben jedoch eine relative niedrige Curie-Temperatur von T_{C} = 310 °C und sind gewöhnlich nur bis 80 °C einsetzbar. Einige Neodym-Werkstoffe sind jedoch bis 150 °C, 180 °C bzw. 200 °C (Typen SH, UH bzw. EH) einsetzbar und können damit auch bei erfindungsgemäßen Verfahren mit höheren Temperaturen verwendet werden.

Das Magnetelement kann Teil des Werkzeugs sein und entweder von außen oder von innen an diesem befestigt sein. So kann das Magnetelement von außen an der Formschale fixiert sein. Dabei ist es vorteilhaft, in der Formschale eine Vertiefung oder Tasche z.B. in Form eines Sacklochs vorzusehen, die das Magnetelement zumindest teilweise aufnimmt, so dass das Magnetelement möglichst dicht an der Innenoberfläche der Werkzeugwandung positioniert werden kann.

Das Magnetelement kann jedoch auch passgenau in einer in der Werkzeugformschale vorgesehenen Durchgangsbohrung oder in einer anderen Öffnung angeordnet sein. Das Magnetelement hat dadurch während der Rotationsformung unmittelbaren Kontakt mit dem Ausgangsmaterial. Seine zum Werkzeuginneren weisende Oberfläche kann dabei je nach den jeweiligen Anforderungen in das Werkzeuginnere vorragen, im Wesentlichen bündig mit der Werkzeuginnenoberfläche abschließen oder unterbündig zu letzterer sein, wodurch sich am Kunststoffformteil ein nach außen vorstehendes Merkmal anformt.

Das Magnetelement kann auch als Einlegeteil oder Einsetzteil ausgeführt werden, das vor der Formgebung derart in der Rotationsschmelzform befestigt wird, dass es nach der Formgebung zumindest teilweise mit dem Formteil integral verbunden ist, also während des Ausformens des Formteils integral in das Formteil eingebaut wird. So kann man das Magnetelement vor der Formgebung zunächst im Werkzeuginneren fixieren. Anschließend wird der Behälter mit einem Ausgangsmaterial (Kunststoff oder Kunststoffvorläufer) befüllt. Während des Rotationsformens wird das Magnetelement in die Wandung das Kunststoffformteils eingebettet, um anschließend im Kunststoffformteil zu verbleiben. Die magnetische Wechselwirkung zwischen magnetischem Einsetzteil bzw. Einlegeteil und der Behälterwandung bewirkt einen dichten und festen Sitz des Einsetzteils bzw. Einlegeteil in der Behälterwand. Bei derartigen Einlegeteilen kann es sich um Rohrstücke, Hülsen, Verstärkungselemente, Flanschringe, Hutmuttern, Sechskantmuttern oder dergleichen handeln, die wegen ihrer magnetischen Eigenschaften einen Teil des Ausgangsmaterials während des Rotationsverfahrens festhalten und so zuverlässig und mit lokal hoher Materialbelegung in das Material des Kunststoffformteils eingebettet werden.

Eine zuverlässige Einbettung von Einlegeteilen lässt sich alternativ auch dadurch erreichen, dass das Magnetelement als Fixierelement bzw. als Halteelement ausgeführt wird, mit welchem das Einlegeteil im Rotationswerkzeug fixiert wird. So kann das Magnetelement z.B. als Gewindebolzen oder Teil eines Gewindebolzens ausgeführt werden, der eine in das Kunststoffformteil einzubettende Mutter im Werkzeug hält. Für eine gute Einbettung des Einlegeteils mit hoher Materialbelegung ist es dabei vorteilhaft, wenn das Einlegeteil eine hohe Suszeptibilität aufweist und die magnetischen Feldlinien bündelt und leitet. Das Magnetelement kann auch als Fixierelement ausgeführt sein, an dem das einzubettende Einlegeteil magnetisch gehalten wird.

Derartige magnetische Bereiche in einem Kunststoffformteil lassen sich vielfältig verwenden. Neben der Herstellung von Kunststoffformteile mit Sichtfenstern lassen sich auch Formteile herstellen, die mehrfarbig sind oder bestimmte Bereiche haben, die besondere andere Eigenschaften aufweisen.

Um die lokale Ansammlung des Ausgangsmaterials durch das Magnetelement zu verbessern, ist nach einer weiteren Ausführungsform vorgesehen, dass die Rotation der Rotationsschmelzform während der Ausformung bzw. Formgebung zumindest in einer Rotationsachse zumindest zeitweise unterbrochen wird. Indem die Rotation des Rotationswerkzeugs zu geeigneten Zeiten im Verlauf des Prozesses zumindest in einer Achse kontrolliert angehalten wird, kann das Ausgangsmaterial im Bereich des Magnetelements zur Ruhe kommen und besser von diesem festgehalten werden.

Gemäß einer weiteren vorteilhaften Ausführungsform wird die Rotation der Rotationsschmelzform derart unterbrochen, dass das Magnetelement an einem tiefsten Punkt der Rotationsschmelzform und/oder unter dem Pegel des Ausgangsmaterials zu liegen kommt. Diese Maßnahme kann wenigstens einmal durchgeführt oder ggf. für verschiedene Bereiche, in denen Magnetelemente angeordnet sind, und/oder für ein und denselben Bereich des Werkzeuges wiederholt werden. Zeitpunkt, Häufigkeit und Dauer dieser Rotationsunterbrechungen sowie die Werkzeugposition während des Stillstandes können so gewählt werden, dass sich das gewünschte Ergebnis erzielen lässt.

Insbesondere bei der Verarbeitung von Ausgangsmaterial in Form von thermoplastischem Kunststoff ist es vorteilhaft, wenn die Rotationsschmelzform zunächst für eine bestimmte Zeit bei Temperaturen unterhalb der Schmelz- oder Erweichungstemperatur des Kunststoffmaterials rotiert wird. Dadurch kann im Bereich des Magnetelements eine hohe Belegung des Werkzeugs mit Ausgangsmaterial bereits vor dem Einsetzen des eigentlichen Sinterprozesses erreicht werden. Wenn bei Beheizung auf Temperaturen oberhalb der Schmelz- oder Erweichungstemperatur des Kunststoffmaterials der Sinterprozess beginnt, weist das Werkzeug im Bereich des Magnetelements schon eine gute Belegung mit noch nicht gesintertem Ausgangsmaterial auf. Bereiche des Kunststoffformteils, die eine besonders hohe Wandstärke erhalten sollen, können so besonders gezielt und bevorzugt beeinflusst werden. Vorteile einer derart verzögerten Beheizung ergeben sich insbesondere auch beim bevorzugten oder selektiven Ansintern eines magnetischen Kunststoffs aus einer Mischung, die ansonsten nicht-magnetische Kunststoffe enthält.

Der Effekt der Materialtrennung und die Trennschärfe kann durch weitere Maßnahmen noch erhöht werden. So kann das Werkzeug zunächst nur mit dem magnetischen Kunststoff befüllt und vorzugsweise biaxial rotiert werden. Wenn das Magnetelement gut mit dem Ausgangsmaterial belegt ist, wird der nicht magnetische Kunststoff zugegeben und das Werkzeug unter biaxialer Rotation aufgeheizt.

Eine weitere Verfahrensvariante sieht vor, dass das magnetische Ausgangsmaterial gezielt entweder direkt auf das Magnetelement oder auf den Bereich im Inneren der Rotationsschmelzform aufgegeben wird, an dem (ggf. von außen) das Magnetelement positioniert ist. Anschließend wird der nicht-magnetische Kunststoff in das Werkzeug gegeben, welches dann rotiert und beheizt wird. Beispielsweise kann man ein magnetisches Kunststoffpulver, das Teil des Ausgangsmaterials darstellt, vor der Eingabe des restlichen Ausgangsmaterials in die Rotationsschmelzform geben, vorzugsweise direkt auf das Magnetelement. Dieses Vorgehen stellt effektiv sicher, dass sich eine große Menge an Material während der Formgebung am Magnetelement sammelt.

Eine weitere Ausführungsform der Erfindung sieht vor, dass nach dem Formgebungsprozess, in einem weiteren Schritt d) die Rotationsschmelzform angehalten, mit einem weiteren Ausgangsmaterial befüllt und wieder in Rotation versetzt wird, so dass sich eine innere zweite Kunststoffschicht ausbildet. Dieser Vorgang kann mehrfach wiederholt werden, wobei unterschiedliche Kunststoffmaterialen mit unterschiedlichen Eigenschaften zum Einsatz kommen können. Das Ausgangsmaterial, mit dem die Rotationsschmelzform befüllt wird, kann wahlweise magnetische Eigenschaften oder nicht magnetische Eigenschaften aufweisen. Auf diese Weise lassen sich Kunststoffbehälter mit mehrschichtigem Wandaufbau mit optimaler Wandstärke oder besonderen Merkmalen herstellen.

In ähnlicher Weise lassen sich auch Kunststoffformteile mit zweischichtig aufgebauter Wandung herstellen, bei denen erst eine zweite/innere Schicht der Formteilwandung magnetisches Material enthält. Erfindungsgemäß ist vorgesehen, dass vor dem Einbringen des Ausgangsmaterials in die Rotationsschmelzform die Rotationsschmelzform mit einem Kunststoff oder Kunststoffvorläufer befüllt und rotiert wird, so dass das Magnetelement und das Ausgangsmaterial nach der Formgebung durch mindestens eine Kunststoffschicht getrennt sind. Dazu wird in einem ersten Schritt ein erstes Ausgangsmaterial ohne magnetische Eigenschaften oder magnetische Zusätze in die Rotationsschmelzform gegeben und unter Rotation zu einer ersten/äußeren Schicht ausgeformt. Dann wird (entweder durch Unterbrechung der Rotation und Öffnen des Werkzeugs oder mit Hilfe eines thermisch isolierten Behälters ("Dropbox"), der an oder im Werkzeug angebracht und mit einem zweiten Ausgangsmaterial gefüllt ist) ein zweites Ausgangsmaterial in Form eines Kunststoffs oder eines Kunststoffvorläufers in die Rotationsschmelzform gegeben, wobei dieses zweite Material zumindest teilweise magnetische Eigenschaften aufweist und/oder magnetische Zusätze enthält. Durch sinngemäße Abwandlung lassen sich auch drei- und mehrschichtige Behälter herstellen, wobei (entweder durch mehrfaches Unterbrechen der Rotation und Öffnen des Werkzeugs oder indem mehrere Dropbox-Behälter am Werkzeug vorgesehen werden) frei gewählt werden kann, wo in der Schichtfolge magnetisches Material angeordnet sein soll.

Die der Erfindung zugrunde liegende Aufgabe wird ferner durch ein Kunststoffformteil gelöst, das durch eines der hierin beschriebenen Verfahren hergestellt ist.

Ferner betrifft die Erfindung auch eine Rotationsschmelzform zur Durchführung eines der hierin beschriebenen Verfahren, wobei die Rotationsschmelzform wenigstens eine um wenigstens eine Rotationsachse rotierenden Formschale umfasst, wobei ein Magnetelement an der Formschale befestigt ist. Hierbei erweist es sich als vorteilhaft, das Magnetelement als Einlegeteil oder als Einsetzteil aus Kunststoff oder Faserkunststoffverbundwerkstoff vorzusehen, das vor der Formgebung derart in der Rotationsschmelzform befestigbar ist, dass es nach der Formgebung zumindest teilweise mit dem Formteil integral verbunden ist.

Weitere Vorteile, Merkmale und Ausführungsbeispiele der Erfindung ergeben sich aus der nachfolgenden Beschreibung von Ausführungsbeispielen und den Zeichnungen. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbezügen.

Es zeigen:
- Fig. 1: in perspektivischer Ansicht eine Rotationsschmelzform zur Herstellung eines Kunststoffformteils nach einer ersten Ausführungsform der Erfindung
- Fig. 2: in einer Schnittansicht einen Ausschnitt der Rotationsschmelzform aus Figur 1;
- Fig. 3: in einer Schnittansicht die Herstellung eines Kunststoffformteils nach einer zweiten Ausführungsform der Erfindung;
- Fig. 4: in einer Schnittansicht die Herstellung eines Kunststoffformteils nach einer dritten Ausführungsform der Erfindung;
- Fig. 5: in einer Schnittansicht die Herstellung eines Kunststoffformteils nach einer vierten Ausführungsform der Erfindung;
- Fig. 6: in einer Schnittansicht die Herstellung eines Kunststoffformteils mit Sichtfenster nach einer fünften Ausführungsform der Erfindung;
- Fig. 7: in einer Schnittansicht die Herstellung eines gebogenen Kunststoffformteils nach einer sechsten Ausführungsform der Erfindung;
- Fig. 8: in einer Schnittansicht die Herstellung eines Kunststoffformteils nach einer siebten Ausführungsform der Erfindung;
- Fig. 9: in perspektivischer Ansicht eine Rotationsschmelzform zur Herstellung eines Kunststoffformteils mit Einsetzteil nach einer achten Ausführungsform der Erfindung;
- Fig. 10: in einer Schnittansicht einen Ausschnitt der Rotationsschmelzform aus Figur 9;

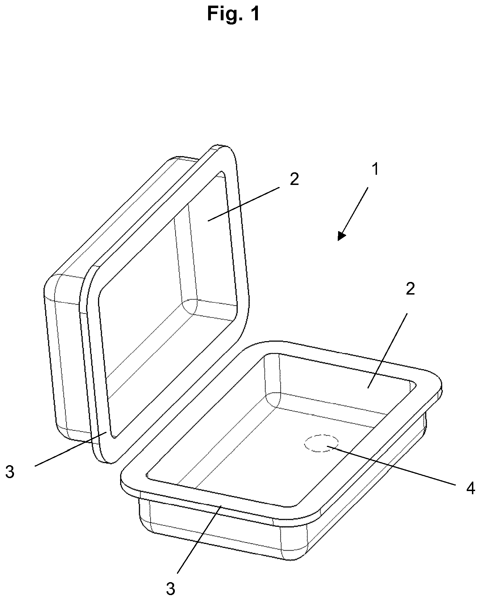

Die Figur 1 zeigt ein Rotationswerkzeug in Form einer Rotationsschmelzform 1 zur Herstellung eines Formteils, insbesondere Behälters, aus Kunststoff durch Rotationsformen, mit Innenwänden 2, deren Kontur die Außenkontur des fertigen Formteils definiert. Das Rotationswerkzeug 1 besteht aus zwei Halbschalen, die entlang ihrer flanschartig ausgebildeten Ränder 3 zusammengesetzt werden und ein hohles Behältnis bilden. Über eine nicht dargestellte Öffnung wird das Rotationswerkzeug mit einem Ausgangsmaterial in Form eines Kunststoffvorläufers oder in Form eines Kunststoffs, der unter Wärmeeinfluss eine Schmelze bildet, gefüllt. Wärme wird in die Rotationsschmelzform 1 mit Hilfe eines nicht dargestellten Ofens eingetragen und die Rotationsschmelzform 1 wird in Rotation um zwei senkrecht zueinander angeordnete Achsen versetzt. Der Kunststoffvorläufer polymerisiert bzw. der Kunststoff schmilzt und beginnt sich an der Innenseite der Rotationsschmelzform anzulegen, wodurch dem Formteil bzw. dem Kunststoffbehälter seine spätere Form gegeben wird.

Im Bodenbereich der Rotationsschmelzform 1 ist außenseitig ein Magnetelement 4 in Form eines Permanentmagneten angebracht. Bei dem in die Rotationsform eingebrachten Ausgangsmaterial handelt es sich nun um ein Kunststoffpulver, das unter dem Einfluss von Wärme schmilzt und die spätere Behälterwand ausbildet. Das Ausgangsmaterial ist magnetisch und so ausgebildet, dass es mit dem Magnetelement 4 in magnetische Wechselwirkung treten kann. Zu diesem Zweck kann das Kunststoffpulver bspw. mit Magnetit-Pulver versetzt sein, so dass die Kunststoffpartikel magnetische Eigenschaften aufweisen und von dem Magnetelement 4 angezogen und festgehalten werden können.

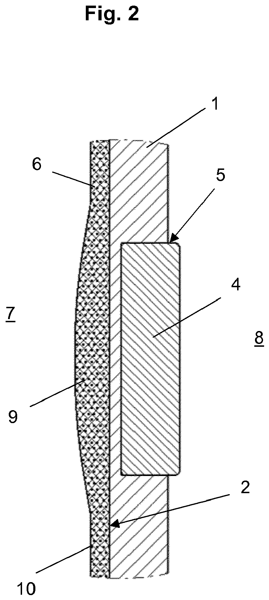

Die Figur 2 zeigt in der Schnittansicht einen Ausschnitt des Bodenbereichs der Rotationsschmelzform 1 aus der Figur 1 während des Herstellungs- bzw. Formprozesses. Eine Vertiefung 5 ist rechtsseitig an der Außenwand der Rotationsschmelzform 1 eingeformt. Das Bezugszeichen 7 kennzeichnet den Innenbereich der Rotationsschmelzform 1, wogegen das Bezugszeichen 8 den Bereich außerhalb der Rotationsschmelzform 1 kennzeichnet. Ein Magnetelement 4 ist von außen in die Vertiefung 5 eingesetzt. Das Ausgangsmaterial 6 hat durch den Wärmeeintrag in der Rotationsschmelzform 1 eine Schmelze gebildet. Durch die Rotation der Rotationsschmelzform 1 um mehrere Achsen hat sich die Schmelze an die Innenwand 2 der Rotationsschmelzform 1 angelegt. Aufgrund des in das Ausgangsmaterial eingebrachten Magnetit-Pulvers wird das Ausgangsmaterial 6 von dem Magnetelement 4 durch einen dünnen Abschnitt der Innenwand 2 hindurch magnetisch angezogen und festgehalten. Es kommt zu einer lokalen Materialansammlung 9 im Bereich des Magnetelements. Durch den Rotationsformprozess bildet das Ausgangsmaterial 6 die Wandung 10 des Formteils, wobei im Bereich des Magnetelements 4 die Wandstärke erhöht ist.

Sind spezielle Formen der Wandstärkenerhöhung 9 gewünscht, kann auch die Form des Magnetelements 4 variiert werden. Beispielsweise kann das Magnetelement 4 die Form eines Ringmagneten haben, wodurch sich ein von der Behälterinnenwand 2 nach innen erstreckender Ring mit lokal erhöhter Wandstärke ausbilden würde.

Im Anschluss an die Formgebung wird die Rotationsform geöffnet und der fertige Behälter entnommen.

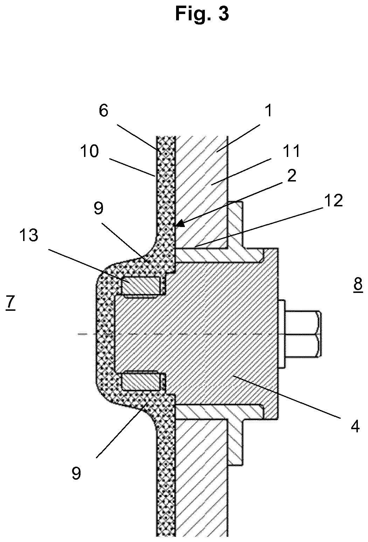

In der Figur 3 ist die Wand 11 einer Rotationsschmelzform 1 mit einer durchgehenden Öffnung 12 versehen. In die Öffnung 12 ist ein Magnetelement 4 zum Halten eines auf einen vorderen Abschnitt des Magnetelements 4 aufgesetzten Einlegeteils 13 eingesetzt. Das Einlegeteil 13 ist im dargestellten Ausführungsbeispiel eine Sechskantmutter. Das Einlegeteil 13 ist magnetisch, so dass es von dem Magnetelement 4 gehalten wird. Das Ausgangsmaterial 6 ist ebenfalls magnetisch legt sich durch den Rotationsschmelzprozesses an der Innenwand 2 der Rotationsschmelzform 1 und über den im Innenbereich 7 des Rotationswerkzeugs 1 angeordneten vorderen Abschnitt des Magnetelements 4 und über das Einlegeteil 13 und bildet anschließend die Behälterwand aus. Dabei wird das Einlegeelement 13 in das Kunststoffformteil eingebettet. Dies garantiert einen festen Sitz des Einlegeteils 13. Durch die magnetische Wechselwirkung mit dem Magnetelement bildet das Ausgangsmaterial 6 eine Wandstärkenerhöhung 9 im Bereich des Einlegeteils 13 aus.

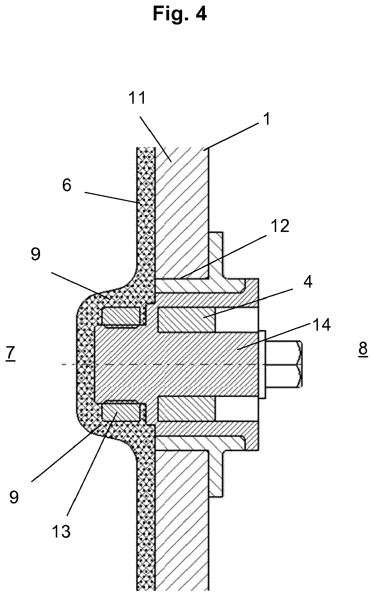

Bei der in Figur 4 dargestellten Ausführungsform besitzt das Rotationswerkzeug ebenfalls eine Öffnung 12 in der Wand 11. In die Öffnung ist ein Halteelement 14 zum Halten eines Einlegeteils 13 eingesetzt, wobei sich der vordere Abschnitt des Halteelements 14 in den Innenbereich 7 der Rotationsschmelzform 1 erstreckt. Außenseitig ist an dem Halteelement 14 eine kreisförmige Öffnung ausgebildet, in die ein Magnetelement 4 in Form eines Ringmagneten eingesetzt ist. Das Einlegeteil 13 besteht aus Metall und wird durch das Magnetelement 4 in seiner Position gehalten. Gleichzeitig wirkt das Magnetelement 4, unmittelbar und/oder vermittelt durch das metallische Einlegeteil 13, mit dem magnetischen Ausgangsmaterial 6 des Behälters zusammen und sorgt für lokale Wandstärkenerhöhungen 9 im Bereich des Einlegeteils 13.

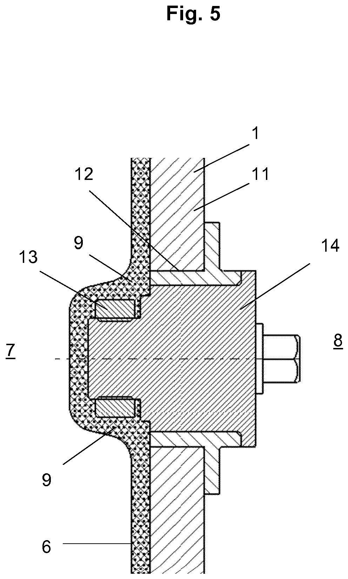

Auch bei der Ausführungsform in Figur 5 ist das Ausgangsmaterial 6 magnetisch und weist einen magnetischen Zusatz auf. Das Halteelement 14 ist nicht magnetisch und nicht dazu ausgebildet, mit dem Ausgangsmaterial 6 des Kunststoffformteils in magnetische Wechselwirkung zu treten. Am vorderen Abschnitt des Halteelements 14, der dem Innenbereich 7 zugewandt ist, ist das Einlegeteil 13 in Form eines Permanentmagneten angeordnet, der einen Teil des Ausgangsmaterials 6 magnetisch anzieht und festhält, so dass sich ein beträchtlicher Teil des Ausgangsmaterials um das Einlegeteil 13 sammelt. Dadurch bildet sich im fertig ausgeformten Formteil eine lokale Wandstärkenerhöhung 9 aus, und das Einlegeteil 13 ist fest in die Wandung 10 des Kunststoffformteils eingebettet.

Das in Figur 5 gezeigte Einlegeteil 13 besteht aus Metall. Alternativ kann das Einlegeteil 13 auch ein Einsetzteil aus Kunststoff sein bzw. aus einem Kunststoff bestehen, der selber magnetisch ist und in magnetische Wechselwirkung mit dem Ausgangsmaterial 6 treten kann.

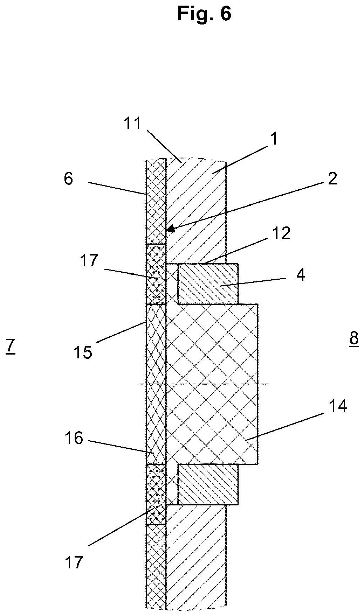

Bei der in der Figur 6 dargestellten Ausführungsform ist in einer Öffnung 12 in der Wand 11 des Rotationswerkzeugs 1 ein Halteelement 14 eingesetzt, wobei auf dem äußeren Umfang eines zur Außenseite 8 gerichteten Abschnitts des Halteelements 14 das Magnetelement 4 in Form eines Ringmagneten aufgesetzt ist. Das Halteelement 14 besteht aus Teflon und wirkt thermisch isolierend. Im Innenbereich des Rotationswerkzeugs ist ein vorgefertigtes Einsetzteil 15 in Form einer Kunststoffscheibe angeordnet.

Das Einsetzteil 15 umfasst einen zentralen transparenten Bereich 16, der ein Sichtfenster aus weißem, transluzentem Polyethylen umfasst. Der Randbereich 17 besteht aus schwarzem Polyethylen mit magnetischen Eigenschaften, so dass der schwarze Kunststoff 17 mit dem Magnetelement 4 in magnetische Wechselwirkung treten kann. Der Zentralbereich 16 ist dagegen nicht magnetisch. Das Magnetelement 4 und der Randbereich 17 des Einsetzteils 15 sind durch einen dünnwandigen Abschnitt des Halteelements 14 voneinander getrennt. Das Magnetelement 4 positioniert über die magnetische Wechselwirkung mit dem Randbereich 17 das Einsetzteil 15 an der Innenwand 2 des Rotationswerkzeugs 1 bzw. hält es dort fest.

Während des Rotationsformprozesses legt sich das Ausgangsmaterial 6 an der Innenwand 2 der Werkzeugwand 11 an. Das Ausgangsmaterial 6 ist im dargestellten Beispiel von schwarzer Farbe. So bildet sich im späteren Formteil ein schwarzer Behälter mit einem weißen bzw. transluzenten Fenster. Der Außendurchmesser des Einsetzteils 15 ist größer als die Öffnung 12 in der Wand 11 des Rotationswerkzeugs bzw. als das thermisch isolierende Halteelement 14. Infolgedessen wird ein äußerer Rand des Einsetzteils 15 während des Rotationsschmelzprozesses über den Kontakt mit der Innenwand 2 der Rotationsschmelzform beheizt. Diese Maßnahme erleichtert das Anbinden bzw. das Ansintern des Ausgangsmaterials 6 an den Rand 17 des Einsetzteils 15.

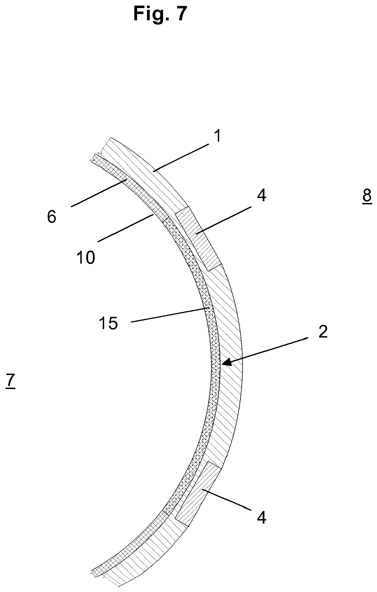

In der Figur 7 ist ein gebogener Abschnitt eines Rotationswerkzeugs 1 dargestellt, in dessen Außenwand zwei Magnetelemente 4 eingesetzt sind. An der Innenwand 2 ist ein gebogenes Faserkunststoffverbund-Einsetzteil 15 eingesetzt. Durch den Rotationsformprozess wird das Einsetzteil 15 in die durch das Ausgangsmaterial 6 gebildete Wandung 10 des Kunststoffformteils eingegaut oder eingebettet. Für den Rotationsformprozess wird das Einsetzteil 15 durch die beiden Magnetelemente 4 in Position gehalten. Das Faserkunststoffverbund-Einsetzteil 15 besitzt zur magnetischen Wechselwirkung mit den Magnetelementen 4 entsprechende, in das Material des Einsetzteils 15 eingebrachte Zusätze, die ihm magnetische Eigenschaften verleihen, so dass das Einsetzteil 15 von den Magnetelementen 4 angezogen und festgehalten werden kann. Das Faserkunststoffverbund-Einsetzteil 15 bildet einen verstärkten Teil der Außenwandung 10 des späteren Kunststoffformteils.

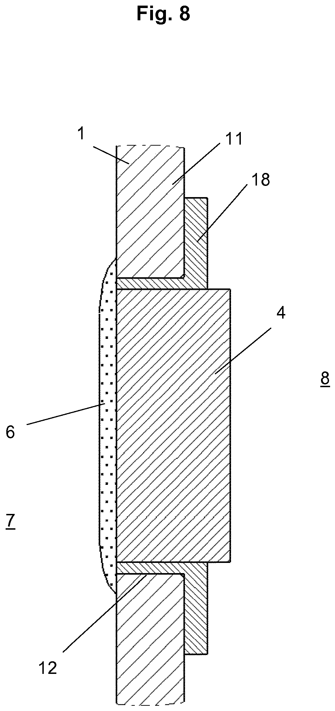

Die Figur 8 zeigt eine in einer durchgehenden Öffnung 12 der Wand 11 des Rotationswerkzeugs 1 angeordnete Buchse 18 zum Halten eines Magnetelements 4. Die Buchse 18 besitzt eine durchgängige Öffnung, so dass das Magnetelement 4 in direktem Kontakt mit dem Innenbereich 7 des Rotationswerkzeugs 1 steht. Dort ist ein magnetisches Ausgangsmaterial 6 in Pulverform direkt auf das Magnetelement 4 aufgegeben. Weiteres Ausgangsmaterial 6 oder ein nicht-magnetischer Kunststoff kann nun in die Rotationsschmelzform 1 eingegeben werden und der Rotationsschmelzprozess kann gestartet werden. Durch das direkte Platzieren von Ausgangsmaterial auf dem Magneten wird eine lokale Wandverstärkung oder - im Fall der Zugabe eines nicht-magnetischen Kunststoffs - ein selektives Anformen des magnetischen Materials im Bereich des Magnetelements effektiv vorbereitet.

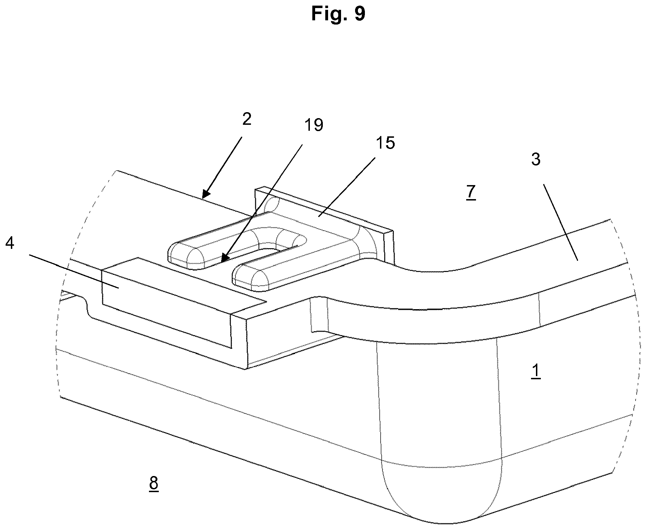

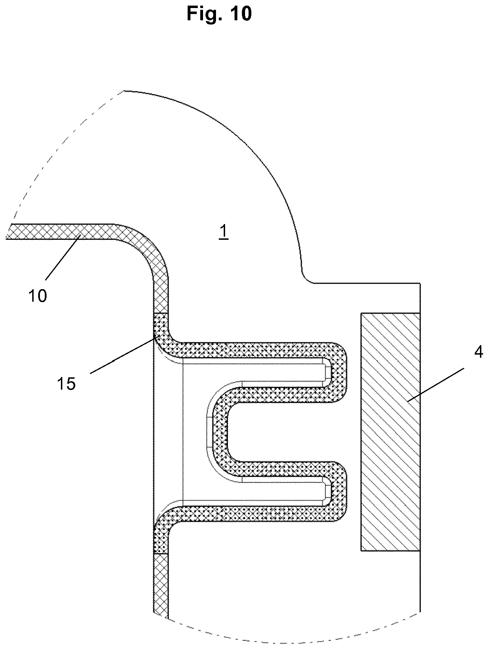

Figur 9 zeigt in perspektivischer Ansicht einen Abschnitt eines Rotationswerkzeugs 1. In den Rand 3 der Rotationsform 1 ist an der Innenwand 2 eine sich in den Rand 3 erstreckende Vertiefung ausgebildet, die eine Aufnahme 19 für ein Einsetzteil 15 aus Kunststoff ausbildet. Das Einsetzteil 15 dient der Herstellung eines Funktions- oder Konturmerkmals in Form einer Lasche in der Außenwand des Kunststoffformteils. An der Außenseite 8 der Rotationsschmelzform 1 ist ein Magnetelement 4 vor das Einsetzteil 15 positioniert. Der Kunststoff des Einsetzteils 15 ist magnetisch und tritt mit dem Magnetelement 4 in magnetische Wechselwirkung, so dass das Einsetzteil 15 über das Magnetelement in der Rotationsschmelzform 1 gehalten wird. Während des Rotationsschmelzprozesses legt sich der geschmolzene Kunststoff an der Innenwand 2 des Rotationswerkzeugs 1 an. Wie die Figur 10 zeigt, ist das Einsetzteil 15 in die Wandung 10 des Kunststoffformteils eingebaut oder eingebettet, wobei das Einsetzteil 15 unmittelbar an die Wandung 10 angebunden ist.

Im Folgenden werden beispielhaft acht Ausführungsformen zur Herstellung eines Kunststoffformteils erläutert.

### Beispiel 1 (Kunststoffvorläufer mit magnetischen Zusätzen, Wandstärkenerhöhung)

Gemäß einer Ausführungsform zur Herstellung eines Kraftstofftanks werden in zwei getrennten Behältern Vormischungen aus ε-Capro|actam mit 0,6 Gew.-% Natrium-Caprolactamat als Katalysator bzw. ε-Caprolactam mit 0,9 Gew.-% Hexamethylen-1,6-bis-carbamido-caprolactam als Aktivator aufgeschmolzen und bei 100 °C vorgehalten. Der zweiten Vormischung werden 2 Gew.-% Magnetit-Pulver (Fe₃O₄; Partikeldurchmesser 2-3 µm) zugesetzt, das vorher für 3 Stunden bei 120 °C unter Vakuum getrocknet worden ist, und die Mischung wird kontinuierlich gerührt, um ein Absetzen der Partikel zu verhindern. Die Behälter mit den beiden Vormischungen sind über Leitungen mit einem Mischkopf verbunden, von dem eine weitere Leitung abgeht, die an ihrem Ende mit einer Einspritzvorrichtung versehen ist. Der Mischkopf, die Leitungen zwischen den Behältern mit den Vormischungen und dem Mischkopf, sowie die Leitung vom Mischkopf zur Einspritzvorrichtung sind beheizbar und werden auf 100 °C gehalten.

Ein Rotationswerkzeug, welches die Form eines Kraftstoffbehälters eines Motorrads haben kann, wird im Bereich der linken Seitenwand des späteren Motorradtanks mit einem Magnetelement in Form eines Neodym-Magneten (Typ EH, Durchmesser 30 mm, Länge 10 mm; axial magnetisiert) versehen, der von außen in einem 7 mm tiefen Sackloch der 8 mm dicken Aluminiumformschale fixiert ist. Das Rotationswerkzeug ist mit einer Belüftungsvorrichtung versehen, die den Druck im Werkzeug auf Atmosphärendruck hält. Das Rotationswerkzeug wird in einem Ofen auf 160 °C vortemperiert. Die beiden Vormischungen werden zu gleichen Gewichtsanteilen im Mischkopf zu einer Reaktionsmischung vereinigt und durchmischt, die somit insgesamt 1 Gew.-% Magnetit-Pulver enthält. Eine erste Teilmenge (2200 g) der Reaktionsmischung wird innerhalb von 20 Sekunden dem Rotationswerkzeug zugeführt. Das Rotationswerkzeug wird in einem auf 205 °C gehaltenen Ofen langsam biaxial rotiert, so dass das Reaktionsgemisch mit jedem Teil der Werkzeuginnenoberfläche in Kontakt kommt und sich auf der Innenoberfläche ablagert. Nach 200 Sekunden wird die Rotation unterbrochen, um dem Werkzeug eine zweite Teilmenge (2200 g) der Reaktionsmischung zuzuführen. Anschließend wird das Werkzeug bei weiterer Beheizung für 180 Sekunden langsam biaxial rotiert, bevor es unter Beibehaltung der Rotation in einer Kühlkammer auf 70°C abgekühlt wird. Das Rotationswerkzeug wird geöffnet, und das Formteil in Form eines Motorradtanks wird entnommen.

Der Motorradtank wird zerschnitten, und die Wandstärke wird gemessen. In dem mit dem Magnetelement versehenen Bereich der Seitenwand wird eine signifikant erhöhte Wandstärke zwischen 4,0 mm und 5,7 mm ermittelt. Im Abstand von 4 cm von diesem Bereich wird eine Wandstärke zwischen 2,8 mm und 4,3 mm gemessen. In dem entsprechenden (nicht mit einem Magnetelement versehenen) Bereich auf der rechten Seite des im Wesentlichen spiegelsymmetrischen Motorradtanks wird eine Wandstärke zwischen 2,6 mm und 4,4 mm gemessen.

### Beispiel 2 (Kunststoff mit magnetischen Zusätzen, Wandstärkenerhöhung)

Gemäß einer Ausführungsform zur Herstellung eines Kunststoffformteils in Form eines quaderförmigen Versuchsbehälters (Abmessungen ca. 20 x 30 x 50 cm³) wird ein entsprechendes Rotationswerkzeug mit 2,6 kg eines schwarzen Polyethylens in Pulverform (Icorene® 1613 BK 85) befüllt, in das zuvor 5 Gew.-% Magnetit-Pulver (Fe₃O₄; Partikeldurchmesser 2-3 µm) eincompoundiert worden ist. Die Polyethylenmenge ist in Bezug auf die Oberfläche des späteren Kunststoffformteils so bemessen, dass sich eine theoretische mittlere Wandstärke von ca. 4,5 mm ergibt.

Das Werkzeug ist auf einer Fläche mit einem Scheiben-Magneten (Durchmesser ca. 100 mm; Länge ca. 30 mm; axial magnetisiert) versehen, der von außen in einem 7 mm tiefen Sackloch der 8 mm dicken Aluminiumformschale fixiert ist.

Das Rotationswerkzeug wird in einem auf 220 °C beheizten Ofen langsam für 25 Minuten biaxial rotiert und dann - immer noch unter biaxialer Rotation - aus dem Ofen in eine Kühlkammer gefahren, in der es im Verlauf von 15 Minuten unter Luftkühlung abgekühlt wird. Das Kunststoffformteil wird entnommen und aufgeschnitten. Die Wandstärkenaufdickung im Bereich des Magnetelements ist bereits mit bloßem Auge deutlich zu erkennen. In diesem Bereich wird eine Wandstärke zwischen 5,9 mm und 6,5 mm gemessen. An anderen Stellen des quaderförmigen Behälters werden Wandstärken zwischen 4,1 mm und 4,9 mm ermittelt.

### Beispiel 3 (Kunststoffmischung mit und ohne magnetische Zusätze)

Das Rotationswerkzeug aus Beispiel 2 wird mit 2,4 kg eines weißen Polyethylens (PE) in Pulverform (Icorene® 1613) ohne magnetische Zusätze befüllt. Zusätzlich werden 100 g des schwarzen PE-Pulvers aus Beispiel 2 (jedoch mit 10 Gew.-% Magnetit-Pulver) in das Werkzeug gegeben.

Das Rotationswerkzeug wird zunächst ohne Beheizung für 10 Minuten langsam biaxial rotiert. Anschließend wird die Rotation in einem auf 220 °C beheizten Ofen für 25 Minuten fortgesetzt. Das Werkzeug wird - immer noch unter biaxialer Rotation - aus dem Ofen in eine Kühlkammer gefahren, in der es im Verlauf von 15 Minuten unter Luftkühlung abgekühlt wird. Das Kunststoffformteil wird entnommen. Das im Wesentlichen weiße Teil hat eine leichte grau-schwarze Marmorierung. Im Bereich des Magnetelements ist ein im Wesentlichen schwarzer Bereich von ca. 100 mm Durchmesser angeformt.

### Beispiel 4 (Kunststoffmischung; direktes Aufgeben der magnetischen Komponente auf das Magnetelement)

In dem Rotationswerkzeug aus Beispiel 2 werden 100 g des schwarzen PE-Materials aus Beispiel 2 (mit 5 Gew.-% Magnetit-Pulver) innen in dem Bereich des Magnetelements auf die Formschale aufgegeben. Nicht am Magneten haftendes Pulver wird durch Drehen und Wenden der offenen Formschale entfernt. 2,4 kg des weißen PE-Materials aus Beispiel 3 werden in das Werkzeug gegeben, welches anschließend geschlossen und in einem auf 220 °C beheizten Ofen langsam für 25 Minuten biaxial rotiert wird. Das Werkzeug wird - immer noch unter biaxialer Rotation - aus dem Ofen in eine Kühlkammer gefahren, in der es im Verlauf von 15 Minuten unter Luftkühlung abgekühlt wird. Das Kunststoffformteil wird entnommen. Das im Wesentlichen weiße Teil hat auf seiner Außenseite nur sehr wenige schwarze Einschlüsse. Im Bereich des Magnetelements ist ein schwarzer Bereich von ca. 100 mm Durchmesser angeformt.

### Beispiel 5 (Einsetzteil aus Kunststoff mit magnetischen Zusätzen, Sichtfenster)

Eine Kunststoffscheibe mit 110 mm Durchmesser wird in dem Rotationswerkzeug aus Beispiel 2 im Bereich des Magnetelements magnetisch fixiert. Die Scheibe hat eine Dicke von 5 mm und besteht aus einem zentralen Bereich (Durchmesser 70 mm) aus weißem Polyethylen und einem umlaufenden Rand (Breite 20 mm) aus schwarzem Polyethylen, das 8 Gew.-% Magnetit-Pulver enthält. Zentraler Bereich und Randbereich sind stoffschlüssig miteinander verbunden.

Das Rotationswerkzeug wird mit 2,6 kg eines schwarzen Polyethylens in Pulverform (Icorene® 1613 BK 85) befüllt, das keine magnetischen Zusätze enthält.

Das Werkzeug wird in einem auf 220 °C beheizten Ofen langsam für 25 Minuten biaxial rotiert und dann - immer noch unter biaxialer Rotation - aus dem Ofen in eine Kühlkammer gefahren wird, in der es im Verlauf von 15 Minuten unter Luftkühlung abgekühlt wird. Ein schwarzes Kunststoffformteil wird entnommen, das auf einer Fläche ein transluzentes Fenster von 70 mm Durchmesser aus weißem Material hat. Die eingesetzte Kunststoffscheibe ist entlang ihres Umfangs stoffschlüssig und flüssigkeitsdicht mit der restlichen Wandung des Behälters verbunden.

### Beispiel 6 (Einsetzteil aus Kunststoff mit magnetischen Zusätzen, Lasche)

Ein Rotationswerkzeug, welches die Form eines Harnstoffbehälters eines Nutzfahrzeugs hat, wird im Bereich einer doppelwandigen Befestigungslasche des späteren Harnstofftanks mit einem Magnetelement versehen. Ein der Werkzeugkontur angepasstes Einsetzteil in Form einer Lasche des späteren Harnstofftanks wird in den Laschenbereich des Werkzeugs eingesetzt. Das Einsetzteil besteht aus schwarzem Polyethylen, das 5 Gew.-% Magnetit-Pulver (Partikelgröße 2-3 µm) enthält, und wird magnetisch im Rotationswerkzeug fixiert.

Das Rotationswerkzeug wird mit schwarzem Polyethylen in Pulverform (Icorene® 1613 BK 85) befüllt, das keine magnetischen Zusätze enthält. Es wird in einem auf 220 °C beheizten Ofen langsam für 25 Minuten biaxial rotiert und dann - immer noch unter biaxialer Rotation - aus dem Ofen in eine Kühlkammer gefahren, in der es im Verlauf von 15 Minuten unter Luftkühlung abgekühlt wird. Das Kunststoffformteil in Form eines Harnstofftanks wird entnommen. Es weist eine Befestigungslasche auf, die stoffschlüssig und flüssigkeitsdicht mit der restlichen Wandung des Behälters verbunden ist.

### Beispiel 7 (Magnetelement in Form eines Halte- oder Fixierelements bzw. als Teil eines Halte- oder Fixierelements zum Halten eines Einlegeteils)

Gemäß einer Ausführungsform zur Herstellung eines Kunststoffformteils in Form eines Kraftstoffbehälters einer Baumaschine wird ein entsprechendes Rotationswerkzeug mit einem Fixierelement in Form eines Gewindebolzens versehen. Der Gewindebolzen ist aus magnetischem Stahl gefertigt und hat einen äußeren Hauptdurchmesser von 36 mm, mit dem er in einer entsprechenden Bohrung der Aluminiumformschale einpassbar ist. In einer großen Sackbohrung des Gewindebolzens ist ein Magnetelement in Form von zwei gestapelten Scheiben-Magneten (Durchmesser 30 mm; Länge jeweils 15 mm; axial magnetisiert) untergebracht, das sich bis knapp unter den in Einbausituation ins Werkzeuginnere weisenden Gewindebereich des Gewindebolzens erstreckt. Der Gewindebereich trägt ein Einlegeteil in Form einer ferromagnetischen Sechskantmutter, die im späteren Kraftstoffbehälter eine Anschlussöffnung bildet.

Die Rotationsschmelzform wird mit 6,3 kg eines schwarzen Polyethylens in Pulverform (Icorene® 1613 BK 85) befüllt, in das zuvor 2 Gew.-% Magnetit-Pulver (Fe₃O₄; Partikeldurchmesser 2-3 µm) eincompoundiert worden ist.

Das Rotationswerkzeug wird in einem auf 220 °C beheizten Ofen langsam für 30 Minuten biaxial rotiert und dann - immer noch unter biaxialer Rotation - aus dem Ofen in eine Kühlkammer gefahren, in der es im Verlauf von 15 Minuten unter Luftkühlung abgekühlt wird. Das Kunststoffformteil wird entnommen und aufgeschnitten. Die behälterinnenseitige Kunststoffschicht auf dem Einlegeteil ist deutlich dicker als bei einem entsprechenden Tank aus demselben Werkzeug, der zuvor mit einem herkömmlichen Gewindebolzen ohne Magnetelement hergestellt worden ist.

### Beispiel 8 (Magnetelement in Form eines Einlegeteils)

Gemäß einer Ausführungsform zur Herstellung eines Kunststoffformteils in Form eines Kraftstoffbehälters einer Baumaschine wird ein entsprechendes Rotationswerkzeug mit einem Gewindebolzen aus Aluminium versehen. Der Gewindebolzen ist in einer Bohrung der Aluminiumformschale eingepasst und trägt an seinem in das Werkzeuginnere weisenden Ende ein Magnetelement in Form einer vorher magnetisierten, d.h. dauermagnetischen, Sechskantmutter, die als Einlegeteil im späteren Kraftstoffbehälter eine Anschlussöffnung bildet.

Die Rotationsschmelzform wird mit 6,3 kg eines schwarzen Polyethylens in Pulverform (Icorene® 1613 BK 85) befüllt, in das zuvor 2 Gew.-% Magnetit-Pulver (Fe₃O₄; Partikeldurchmesser 2-3 µm) eincompoundiert worden ist.

Das Rotationswerkzeug wird in einem auf 220 °C beheizten Ofen langsam für 30 Minuten biaxial rotiert und dann - immer noch unter biaxialer Rotation - aus dem Ofen in eine Kühlkammer gefahren, in der es im Verlauf von 15 Minuten unter Luftkühlung abgekühlt wird. Das Kunststoffformteil wird entnommen und aufgeschnitten. Die behälterinnenseitige Kunststoffschicht auf dem dauermagnetischen Einlegeteil ist deutlich dicker als bei einem entsprechenden Tank aus demselben Werkzeug, der zuvor mit einem nicht dauermagnetischem Einlegeteil hergestellt worden ist.

### Bezugszeichenliste

- 1: Rotationswerkzeug (Rotationsform)
- 2: Innenwand Rotationswerkzeug
- 3: Rand
- 4: Magnetelement
- 5: Vertiefung
- 6: Ausgangsmaterial
- 7: Innenbereich Rotationswerkzeug
- 8: Außenbereich Rotationswerkzeug
- 9: Wandstärkenerhöhung
- 10: Wandung Kunststoffformteil
- 11: Wand Rotationswerkzeug
- 12: Öffnung
- 13: Einlegeteil
- 14: Halteelement
- 15: Einsetzteil
- 16: zentraler Bereich
- 17: Randbereich
- 18: Buchse
- 19: Aufnahme

## Patentansprüche

1. Verfahren zur Herstellung eines Formteils, insbesondere Behälters, aus Kunststoff durch Rotationsformen, wobei ein Ausgangsmaterial (6) in Form eines Kunststoffs oder eines Kunststoffvorläufers in eine Rotationsschmelzform (1) eingebracht und unter Rotation der Rotationsschmelzform (1) ausgeformt wird, wobei die Rotationsschmelzform (1) mit mindestens einem Magnetelement (4, 13) versehen ist, wobei das Magnetelement (4, 13) beim Ausformen zusammen mit der Rotationsschmelzform (1) rotiert, wobei das Ausgangsmaterial (6) und das Magnetelement (4, 13) derart ausgebildet sind, dass das Ausgangsmaterial (6) und das Magnetelement (4, 13) in magnetische Wechselwirkung treten und ein Teil des Ausgangsmaterials (6) während des Ausformens von dem Magnetelement (4, 13) angezogen und festgehalten wird.

2. Verfahren nach Anspruch 1, **dadurch gekennzeichnet, dass** das Ausgangsmaterial (6) einen magnetischen Zusatz aufweist.

3. Verfahren nach Anspruch 1 oder 2, **dadurch gekennzeichnet, dass** das Ausgangsmaterial (6) eine in das Ausgangsmaterial (6) vorzugsweise chemisch eingebundene Komponente enthält, die dazu ausgebildet ist, mit dem Magnetelement (4, 13) in magnetische Wechselwirkung zu treten.

4. Verfahren nach einem der vorhergehenden Ansprüche, **dadurch gekennzeichnet, dass** das Magnetelement (4, 13) ein Permanentmagnet ist.

5. Verfahren nach einem der vorhergehenden Ansprüche, **dadurch gekennzeichnet, dass** das Ausgangsmaterial (6) Teil einer Mischung ist, wobei wenigstens ein weiterer Teil der Mischung nicht-magnetisch ist.

6. Verfahren nach einem der vorhergehenden Ansprüche, **dadurch gekennzeichnet, dass** die Rotation der Rotationsschmelzform (1) während des Ausformens zumindest in einer Rotationsachse zumindest zeitweise unterbrochen wird.

7. Verfahren nach Anspruch 6, **dadurch gekennzeichnet, dass** die Rotation der Rotationsschmelzform (1) derart unterbrochen wird, dass das Magnetelement (4, 13) an einem tiefsten Punkt der Rotationsschmelzform (1) und/oder unter dem Pegel des Ausgangsmaterials (6) zu liegen kommt.

8. Verfahren nach einem der vorhergehenden Ansprüche, **dadurch gekennzeichnet, dass** nach dem Ausformen des Ausgangsmaterials (6) die Rotationsschmelzform (1) mit wenigstens einem weiteren Kunststoff und/oder einem Kunststoffvorläufer befüllt und rotiert wird.

9. Verfahren nach einem der vorhergehenden Ansprüche, **dadurch gekennzeichnet, dass** vor dem Einbringen des Ausgangsmaterials (6) in die Rotationsschmelzform (1) die Rotationsschmelzform (1) mit wenigstens einem Kunststoff und/oder Kunststoffvorläufer befüllt und rotiert wird.

10. Verfahren nach einem der vorhergehenden Ansprüche, **dadurch gekennzeichnet, dass** das Magnetelement ein Einlegeteil (13) oder ein Einsetzteil (15) aus Kunststoff ist, das vor der Ausformung derart in der Rotationsschmelzform (1) befestigt ist, dass es nach der Ausformung zumindest teilweise mit dem Formteil integral verbunden ist.

11. Verfahren zur Herstellung eines Formteils, insbesondere Behälters, aus Kunststoff durch Rotationsformen, wobei ein Ausgangsmaterial (6) in Form eines Kunststoffs oder eines Kunststoffvorläufers in eine Rotationsschmelzform (1) eingebracht und unter Rotation der Rotationsschmelzform (1) ausgeformt wird, wobei ein zumindest teilweise aus Kunststoff bestehendes Einsetzteil (15) in eine Rotationsschmelzform (1) eingebracht und während des Ausformens des Formteils integral in das Formteil eingebaut wird, wobei die Rotationsschmelzform (1) mit mindestens einem Magnetelement (4) versehen ist, wobei das Magnetelement (4,13) beim Ausformen zusammen mit der Rotationschmelzform (1) rotiert, wobei das Einsetzteil (15) und das Magnetelement (4) derart ausgebildet sind, dass der Kunststoff des Einsetzteils (15) und das Magnetelement (4) in magnetische Wechselwirkung treten und das Einsetzteil (15) während des Ausformens von dem Magnetelement (4) angezogen und festgehalten wird, wobei das Einsetzteil (15) nach innen überwiegend freiliegt.

12. Verfahren nach Anspruch 11, **dadurch gekennzeichnet, dass** der überwiegende, nach innen frei liegende Teil des Einsetzteils über 50% seiner der Innenseite des Formteils zugewandten Fläche beträgt.

13. Verfahren nach Anspruch 11, **dadurch gekennzeichnet, dass** das Einsetzteil (15) aus einem Faserkunststoffverbundwerkstoff oder einer Vorstufe eines Faserkunststoffverbundwerkstoffs besteht.

14. Verfahren nach Anspruch 13, **dadurch gekennzeichnet, dass** der Faserkunststoffverbundwerkstoff einen thermoplastischen oder einen duroplastischen Kunststoff enthält.

15. Formteil, insbesondere Kunststoffbehälter, **dadurch gekennzeichnet, dass** es durch ein Verfahren nach einem der vorhergehenden Ansprüche hergestellt ist.

## Claims

1. A method for the production of a molded part, especially a container, made of plastic by means of rotational molding, whereby a starting material (6) in the form of a plastic or a plastic precursor is placed into a rotational melt mold (1) and, while the rotational melt mold (1) is rotating, it is shaped, whereby the rotational melt mold (1) is fitted with at least one magnetic element (4, 13), whereby the magnetic element (4, 13) rotates together with the rotational melt mold (1) during the shaping process,
whereby the starting material (6) and the magnetic element (4, 13) are configured in such a way that the starting material (6) and the magnetic element (4, 13) interact magnetically, and a portion of the starting material (6) is attracted and held in place by the magnetic element (4, 13) during the shaping process.

2. The method according to claim 1, **characterized in that** the starting material (6) has a magnetic additive.

3. The method according to claim 1 or 2, **characterized in that** the starting material (6) contains a component that is preferably chemically incorporated into the starting material (6) and that is configured to interact magnetically with the magnetic element (4, 13).

4. The method according to one of the preceding claims, **characterized in that** the magnetic element (4, 13) is a permanent magnet.

5. The method according to one of the preceding claims, **characterized in that** the starting material (6) is part of a mixture, whereby at least another part of the mixture is non-magnetic.

6. The method according to one of the preceding claims, **characterized in that** the rotation of the rotational melt mold (1) is interrupted during the shaping at least in one rotational axis, at least temporarily.

7. The method according to claim 6, **characterized in that** the rotation of the rotational melt mold (1) is interrupted in such a way that the magnetic element (4, 13) comes to rest at a lowest point of the rotational melt mold (1) and/or below the level of the starting material (6).

8. The method according to one of the preceding claims, **characterized in that**, after the starting material (6) has been shaped, the rotational melt mold (1) is filled with at least another plastic and/or a plastic precursor and rotated.

9. The method according to one of the preceding claims, **characterized in that**, before the starting material (6) is placed into the rotational melt mold (1), the rotational melt mold (1) is filled with at least one plastic and/or plastic precursor and rotated.

10. The method according to one of the preceding claims, **characterized in that** the magnetic element is an insert part (13) or an integral part (15) made of plastic that is attached in the rotational melt mold (1) before the shaping process in such a way that, after the shaping process, it is at least partially joined integrally to the molded part.

11. A method for the production of a molded part, especially a container, made of plastic by means of rotational molding, whereby a starting material (6) in the form of a plastic or a plastic precursor is placed into a rotational melt mold (1) and, while the rotational melt mold (1) is rotating, it is shaped, whereby an integral part (15) made at least partially of plastic is placed into a rotational melt mold (1) and is incorporated integrally into the molded part during the shaping of the molded part, whereby the rotational melt mold (1) is fitted with at least one magnetic element (4), whereby the magnetic element (4, 13) rotates together with the rotational melt mold (1) during the shaping process, whereby the integral part (15) and the magnetic element (4) are configured in such a way that the plastic of the integral part (15) and the magnetic element (4) interact magnetically, and the integral part (15) is attracted and held in place by the magnetic element (4) during the shaping process, whereby a portion of the integral part (15) is exposed towards an inside of the molded part.

12. The method according to claim 11, **characterized in that** the portion of the integral part (15) that is exposed towards the inside of the molded part amounts to over 50% of a surface of the integral part (15) facing the inside of the molded part.

13. The method according to claim 11, **characterized in that** the integral part (15) is made of a fiber-reinforced plastic composite or of a precursor of a fiber-reinforced plastic composite.

14. The method according to claim 13, **characterized in that** the fiber-reinforced plastic composite contains a thermoplastic or a thermoset plastic.

15. A molded part, especially a plastic container, **characterized in that** it is produced by means of a method according to one of the preceding claims.

## Revendications

1. Procédé de fabrication d'une pièce moulée, en particulier d'un récipient en matière plastique, par des moules rotatifs, dans lequel un matériau initial (6), sous la forme d'une matière plastique ou d'un précurseur de matière plastique, est intégré dans un moule de fusion par rotation (1) et est moulé par rotation du moule de fusion par rotation (1), le moule de fusion par rotation (1) étant pourvu d'au moins un élément magnétique (4, 13), l'élément magnétique (4, 13) tournant en même temps que le moule de fusion par rotation (1) lors du moulage,
le matériau initial (6) et l'élément magnétique (4, 13) étant réalisés de manière à ce que le matériau initial (6) et l'élément magnétique (4, 13) entrent en interaction magnétique et qu'une partie du matériau initial (6) soit attirée et maintenue par l'élément magnétique (4, 13) pendant le moulage.

2. Procédé selon la revendication 1, **caractérisé en ce que** le matériau initial (6) présente un additif magnétique.

3. Procédé selon la revendication 1 ou 2, **caractérisé en ce que** le matériau initial (6) contient un composant intégré de préférence chimiquement dans le matériau initial (6) et qui est conçu pour entrer en interaction magnétique avec l'élément magnétique (4, 13).

4. Procédé selon une des revendications précédentes, **caractérisé en ce que** l'élément magnétique (4, 13) est un aimant permanent.

5. Procédé selon une des revendications précédentes, **caractérisé en ce que** le matériau initial (6) fait partie d'un mélange, au moins une autre partie du mélange étant non magnétique.

6. Procédé selon une des revendications précédentes, **caractérisé en ce que** la rotation du moule de fusion par rotation (1) est interrompue du moins temporairement pendant le moulage du moins dans un axe de rotation.

7. Procédé selon la revendication 6, **caractérisé en ce que** la rotation du moule de fusion par rotation (1) est interrompue de manière à ce que l'élément magnétique (4, 13) vienne se poser à un point le plus bas du moule de fusion par rotation (1) et/ou sous le niveau du matériau initial (6).

8. Procédé selon une des revendications précédentes, **caractérisé en ce que**, après le moulage du matériau initial (6), le moule de fusion par rotation (1) est rempli d'au moins une autre matière plastique et/ou d'un précurseur de matière plastique et mis en rotation.

9. Procédé selon une des revendications précédentes, **caractérisé en ce que**, avant l'introduction du matériau initial (6) dans le moule de fusion par rotation (1), le moule de fusion par rotation (1) est rempli d'au moins une autre matière plastique et/ou d'un précurseur de matière plastique et mis en rotation.

10. Procédé selon une des revendications précédentes, **caractérisé en ce que** l'élément magnétique est une pièce intégrée (13) ou une pièce insérée (15) en matière plastique qui, avant le moulage, est fixée dans le moule de fusion par rotation (1) de manière à être connectée en en faisant partir intégrante au moins partiellement à la pièce moulée après le moulage.

11. Procédé de fabrication d'une pièce moulée, en particulier d'un récipient en matière plastique par des moules rotatifs, dans lequel un matériau initial (6), sous la forme d'une matière plastique ou d'un précurseur de matière plastique, est intégré dans un moule de fusion par rotation (1) et est moulé par rotation du moule de fusion par rotation (1), dans lequel une pièce insérée (15) composée au moins partiellement de matière plastique est intégrée dans un moule de fusion par rotation (1) dans la pièce moulée en en devenant partie intégrante pendant le moulage, le moule de fusion par rotation (1) étant pourvu d'au moins un élément magnétique (4), l'élément magnétique (4, 13) tournant en même temps que le moule de fusion par rotation (1) lors du moulage,
la pièce insérée (15) et l'élément magnétique (4) étant réalisés de manière à ce que la matière plastique de la pièce insérée (15) et l'élément magnétique (4) entrent en interaction magnétique et que la pièce insérée (15) soit attirée et maintenue par l'élément magnétique (4) pendant le moulage, la majorité de la pièce insérée (15) étant exposée à l'interieur.

12. Procédé selon la revendication 11, **caractérisé en ce que** le part majeur de la pièce insérée (15) exposé à l'interieur est plus de 50 % de sa surface en face de l'interieur de la pièce moulée.

13. Procédé selon la revendication 11, **caractérisé en ce que** la pièce insérée (15) est composée ou d'un stade d'un matériau composite de matière plastique fibreuse ou d'un stade préalable d'un matériau composite de matière plastique fibreuse.

14. Procédé selon la revendication 13, **caractérisé en ce que** le matériau composite de matière plastique fibreuse contient une matière plastique thermoplastique ou duroplastique.

15. Pièces moulées, en particuliers récipients en plastique, **caractérisé en ce qu'**elle est fabriquée par un procédé selon une des revendications précédentes.
